(19) Europäisches Patentamt
European Patent Office
Office européen des brevets

(11) **EP 2 033 326 B1**

(12) **EUROPÄISCHE PATENTSCHRIFT**

(45) Veröffentlichungstag und Bekanntmachung des Hinweises auf die Patenterteilung:
**25.11.2009 Patentblatt 2009/48**

(21) Anmeldenummer: **07726098.2**

(22) Anmeldetag: **20.06.2007**

(51) Int Cl.:
*H04B 1/26* (2006.01)    *H04B 1/00* (2006.01)

(86) Internationale Anmeldenummer:
**PCT/EP2007/005451**

(87) Internationale Veröffentlichungsnummer:
**WO 2008/000383 (03.01.2008 Gazette 2008/01)**

(54) **SIGNALAUFBEREITER UND VERFAHREN ZUM VERARBEITEN EINES EMPFANGSSIGNALS**

SIGNAL PROCESSOR AND METHOD FOR PROCESSING A RECEIVED SIGNAL

CONDITIONNEUR DE SIGNAUX ET PROCÉDÉ DE TRAITEMENT D'UN SIGNAL DE RÉCEPTION

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **27.06.2006 DE 102006029486**

(43) Veröffentlichungstag der Anmeldung:
**11.03.2009 Patentblatt 2009/11**

(73) Patentinhaber: **Fraunhofer-Gesellschaft zur Förderung der Angewandten Forschung e.V. 80686 München (DE)**

(72) Erfinder:
• **CARRERA, Alfonso**
**20011 Donostia - San Sebastian (ES)**
• **KÖHLER, Stefan**
**90461 Nürnberg (DE)**
• **ROHMER, Günter**
**91058 Erlangen (DE)**

(74) Vertreter: **Zinkler, Franz et al**
**Schoppe, Zimmermann, Stöckeler & Zinkler Patentanwälte**
**Postfach 246**
**82043 Pullach bei München (DE)**

(56) Entgegenhaltungen:
**WO-A-97/14052        US-A- 5 610 984**
**US-A1- 2006 046 773**

**Beschreibung**

Die vorliegende Erfindung bezieht sich im Allgemeinen auf einen Signalaufbereiter und ein Verfahren zum Verarbeiten eines Empfangssignals, im Speziellen auf einen breitbandigen Dual-Empfänger mit Doppel-Umsetzung und niedriger Zwischenfrequenz.

Bei vielen Anwendungen ist es heutzutage wünschenswert bzw. erforderlich, mehrere Nutzfrequenzbänder gleichzeitig zu empfangen. Beispielsweise ist es in dem Bereich der satellitengestützten Positionsbestimmung zur Verbesserung einer Ortsauflösung zweckmäßig, Signale in zwei voneinander beabstandeten Nutzfrequenzbereichen auszuwerten. Auch im Bereich der Mobilkommunikation ist es im Übrigen teilweise wünschenswert, Signale in zwei verschiedenen Frequenzbändern gleichzeitig oder alternativ zu empfangen und auszuwerten.

Dual-Empfänger ermöglichen den gleichzeitigen Empfang von zwei verschiedenen Bändern durch einen einzigen Empfänger, was Leistungsaufnahme und Kosten spart.

Bei derzeit verendeten Empfängern für die oben beschriebenen Anwendungsgebiete, also beispielsweise für den gleichzeitigen Empfang von zwei Bändern bei einem satellitengestützten Navigationssystem, gibt es zwei Gruppen zu unterscheiden: Sehr breitbandige Empfänger, und relativ schmalbandige Dual-Empfänger. In beiden Fällen handelt es sich um hochgenaue Empfänger für high-end Navigations- und Ortsbestimmungssysteme.

Bei der ersten Art von Empfängern wird eine hohe Genauigkeit (beispielsweise in Hinblick auf die Positionsbestimmung) durch die große Bandbreite des Übertragungsverfahrens DSSS (Direkt-Sequenz-gespreiztes-Spektrum bzw. directsequence spread spectrum) erreicht. Beispielsweise wird eine Bandbreite in einem Bereich zwischen 20 MHz bis zu 70 MHz oder mehr verwendet. Eine derart hohe Bandbreite zu verarbeiten stellt eine große Herausforderung für den Empfänger dar. Durch eine große Bandbreite sind vor allem eine Filterung und eine Gruppenlaufzeitänderung in einem Durchlassbereich der Filter, eine Grenzfrequenz eines Verstärkers mit variabler Verstärkung (auch als VGA bzw. Variable Gain Amplifier bezeichnet) und eine Abtastrate eines Analog-Digital-Umsetzers (auch als ADU bezeichnet) betroffen. Auf Grund der hohen benötigten Bandbreite bzw. der hohen Grenzfrequenz ist beispielsweise ein Anti-Alias-Filter (das beispielsweise dem Analog-Digital-Umsetzer vorgeschaltet ist) passiv implementiert. Der Verstärker mit einstellbarer Verstärkung (VGA) und der Analog/Digital-Umsetzer (ADU) benötigen (aufgrund der großen zu verarbeitenden Signalbandbreite) vergleichsweise viel Strom.

Bei einer zweiten Art von Empfängern wird eine hohe Genauigkeit durch einen gleichzeitigen Empfang von zwei Bändern bzw. Frequenzbändern erreicht. Durch dieses Verfahren werden, unter anderem, eine ionosphärische Gruppenlaufzeitänderung (die in einem Navigationssystem bzw. satellitenbasierten Positionsbestimmungssystem eine negative Einflussgröße darstellt) durch eine Messung von zwei Verzögerungen aus zwei verschiedenen Trägerfrequenzen kompensiert. Herkömmlicherweise zum Empfang von zwei Frequenzbändern eingesetzte Empfängerarchitekturen weisen allerdings, ebenso wie breitbandige Empfänger, eine vergleichsweise komplexe Schaltungsstruktur und eine vergleichsweise hohe Stromaufnahme auf.

Die WO 97/14052 beschreibt ein System zur globalen Positionsbestimmung, das zwei Frequenzen verwendet. Ein Empfänger eines Systems zur globalen Positionsbestimmung gewinnt die L1 und L2 Träger, die C/A-Code-Messungen und die L1 und L2 P-Codemessungen. Dabei erzeugt der Empfänger einen Schätzwert eines Träger-Phasenwinkels des L1 Signals und synchronisiert einen lokal erzeugten C/A-Code mit dem L1 Signal unter Verwendung einer L1-verzögerungsgerasteten Schleife. Der Träger steuert, basierend auf dem lokal erzeugten C/A-Code, einen L1 P-Codegenerator, der eine synchronisierte Version des P-Codes erzeugt. Der Empfänger initialisiert einen L2 P-Codegenerator basierend auf der Phase des P-Codes, der durch den L1 P-Codegenerator erzeugt worden ist. Der Empfänger bestimmt für das L2 Signal einen Schätzwert einer Signalleistung, der angepasst ist, um ein Rauschen zu kompensieren. Der Empfänger bestimmt ferner einen L2 Trägerphasenwinkel. Der Empfänger verfolgt den L2 P-Code, indem er den L2 P-Codegenerator abstimmt, bis der Schätzwert der Signalleistung maximiert ist. Der GPS-Empfänger löst auch eine ½-Zyklus-Mehrdeutigkeit bei der Verfolgung des L2 P-Codes, indem die modulierten L1 P-Codebits und L2 P-Codebits verglichen werden. Wenn die Bits in einer Mehrzahl von Fällen nicht übereinstimmen, so bestimmt der Empfänger, dass er den L2 P-Code mit einem Fehler von einem halben Zyklus verfolgt und stellt seinen Schätzwert der P-Code-Phase entsprechend ein. Der Empfänger verfolgt somit den L2 P-Code und Träger unabhängig von dem L1 Signal.

Die US 2006/046773 A1 beschreibt ein Verfahren und eine Vorrichtung zur Verarbeitung mehrerer drahtloser Kommunikationsdienste. Ein Empfänger empfängt mehr als einen drahtlosen Kommunikationsdienst gleichzeitig über eine drahtlose Schnittstelle. Jeder Dienst wird über ein unterschiedliches Trägerfrequenzband gesendet. Die mehreren empfangenen Trägersignale werden unter Verwendung eines Mischers und eines Lokaloszillators in ein Zwischenfrequenzband nach unten umgesetzt. Die Frequenzen des Lokaloszillators werden so gewählt, dass die nach unten umgesetzten Zwischenfrequenzbänder der mehreren Dienste in ein einziges Zwischenfrequenzband fallen.

Die US 5,610,984 beschreibt ein Verfahren zum optimalen L2-Verfolgen in einem SPS-Empfänger zur Verwendung einer Verschlüsselung und ohne Kenntnis von Verschlüsselungs-Zeitcharakteristika.

Der optimale SPS-Empfänger umfasst das digitale Filter mit einstellbaren Charakteristika in jedem digitalen Verarbeitungskanal. Das optimale Design des SPS-Empfängers wird erreicht, indem Filtercharakteristika jedes digitalen Filters eingestellt werden, um an das beobachtete Spektrum des verbliebenen Signals mit unbekannten W-Code angepasst zu sein. Die Anpassoperation kann für jeden Satellitenkanal mit dessen eigenem geheimen W-Codesignal ausgeführt werden.

In Anbetracht des Stands der Technik ist es die Aufgabe der vorliegenden Erfindung, ein Konzept zur Aufbereitung eines Empfangssignals zu schaffen, das einen Empfang von zwei getrennten Frequenzbändern unter Verwendung einer ressourcen-effizienten Schaltungsstruktur ermöglicht.

Diese Aufgabe wird durch einen Signalaufbereiter gemäß Anspruch 1 sowie durch ein Verfahren zum Verarbeiten eines Empfangssignals gemäß Anspruch 22 gelöst.

Die vorliegende Erfindung schafft einen Signalaufbereiter zum Verarbeiten eines Empfangssignals mit einem ersten Nutzfrequenzband und einem zweiten Nutzfrequenzband gemäß dem Anspruch 1.

Gemäß einem Kerngedanken der vorliegenden Erfindung ermöglicht die erfindungsgemäße Frequenzplanung, d. h. die erfindungsgemäße Wahl der Frequenzen des ersten Lokaloszillators und des zweiten Lokaloszillators, eine gemeinsame Verarbeitung der beiden Nutzfrequenzbereiche im Rahmen eines einzigen Signalpfades, wobei die entstehenden Zwischenfrequenzen besonders niedrig sind. Durch die Erzeugung sowohl eines Inphase-Signals als auch eines Quadratur-Signals wird es im Übrigen ermöglicht, bei der zweiten Mischung die beiden Nutzfrequenzbänder auf einen besonders niedrigen, gemeinsamen Zwischenfrequenzbereich abzubilden, wobei dennoch gewährleistet ist, die Informationsinhalte der beiden Nutzfrequenzbänder wieder trennen zu können.

Durch die erfindungsgemäße Struktur eines Signalaufbereiters verringert sich der Aufwand zur Spiegelfrequenzunterdrückung, da das durch den ersten Mischer erzeugte Abbild des ersten Nutzfrequenzbands und das durch den ersten Mischer erzeugte Abbild des zweiten Nutzfrequenzbands bezüglich der Frequenz des zweiten Lokaloszillatorsignals zumindest teilweise Spiegelbänder zueinander sind. Somit ist es lediglich erforderlich, im Rahmen der zweiten Mischung das Abbild des ersten Nutzfrequenzbands und das Abbild des zweiten Nutzfrequenzbands zu trennen, wodurch eine separate Spiegelfrequenzunterdrückung nicht mehr erforderlich ist. Wären hingegen, wie dies herkömmlicherweise der Fall ist, das durch die erste Mischung erzeugte Abbild des ersten Nutzfrequenzbands und das durch die erste Mischung erzeugte Abbild des zweiten Nutzfrequenzbands nicht Spiegelbänder zueinander, so wäre es im Rahmen der zweiten Mischung erforderlich, eine Spiegelfrequenzunterdrückung zu implementieren und ferner zusätzlich eine Trennung der Informationsinhalte des ersten Nutzfrequenzbands und des zweiten Nutzfrequenzbands zu erzielen. In anderen Worten, durch die erfindungsgemäße Architektur des Signalaufbereiters wird eine Spiegelfrequenzunterdrückung und eine Trennung der Informationsinhalte der zwei Nutzfrequenzbänder bei der zweiten Mischung kombiniert durchgeführt, wodurch sich ein Schaltungsaufwand und damit eine Leistungsaufnahme im Vergleich zu herkömmlichen Lösungen wesentlich verringern.

Der erfindungsgemäße Signalaufbereiter bringt somit den Vorteil mit sich, dass eine breitbandige Spiegelfrequenzunterdrückung mit geringem Aufwand erzielt wird. Ferner werden zwei Nutzfrequenzbänder in einem einzigen Signalpfad verarbeitet. Durch die erfindungsgemäße Wahl der Frequenzen der Lokaloszillatorsignale werden bei der gleichzeitigen Verarbeitung der beiden Nutzfrequenzbänder besonders niedrige Zwischenfrequenzen erzielt, wodurch sich die Anforderungen an die entsprechenden Verstärker und an den Analog/Digital-Wandler verringern. Die niedrigen Zwischenfrequenzen und die niedrige erforderliche Abtastfrequenz des Analog/Digital-Wandlers resultiert im Übrigen in einer besonders niedrigen Stromaufnahme der erfindungsgemäßen Anordnung.

Im Übrigen sei darauf hingewiesen, dass sich die erfindungsgemäße Architektur eines Signalaufbereiters besonders gut für eine monolithische Integration, beispielsweise unter Verwendung einer CMOS-Technologie, eignet. Ferner ist aufgrund der erfindungsgemäßen Architektur einer Signalaufbereitung nur ein einziger Frequenzsynthesizer erforderlich, der das erste Lokaloszillatorsignal erzeugt, da das erste Lokaloszillatorsignal sowohl einer Frequenzumsetzung der Informationsinhalte des ersten Nutzfrequenzbands als auch der Informationsinhalte des zweiten Nutzfrequenzbandes dient. Dadurch verringert sich der Schaltungsaufwand sowie die Stromaufnahme der erfindungsgemäßen Schaltungsanordnung im Vergleich zu herkömmlichen Lösungen weiter.

Insgesamt ist somit festzuhalten, dass der erfindungsgemäße Signalaufbereiter eine vollständige Unterdrückung der im Rahmen einer zweistufigen Frequenzumsetzung auftretenden Spiegelfrequenzen ermöglicht, während gleichzeitig ein im Vergleich zu herkömmlichen Schaltungsanordnungen niedrige Stromaufnahme gewährleistet ist. Auf einen Einsatz von komplexen aktiven Bandpässen kann durch die erfindungsgemäße Frequenzplanung beispielsweise verzichtet werden.

Bei einem bevorzugten Ausführungsbeispiel ist die Frequenz des ersten Lokaloszillatorsignals so gewählt, dass das erste Nutzfrequenzband und das zweite Nutzfrequenzband durch den Mischer auf nicht-überlappende oder voneinander beabstandete Frequenzbänder abgebildet werden. Somit sind das erste Nutzfrequenzband und das zweite Nutzfrequenzband nach der Mischung durch den ersten Mischer auf frequenzmäßig getrennte Frequenzbänder abgebildet. Dadurch wird ermöglicht, dass die Frequenz des zweiten Lokaloszillatorsignals zwischen den Abbildern des ersten Nutzfrequenzbandes und des zweiten Nutzfrequenzbandes positioniert werden kann.

Bei einem weiteren bevorzugten Ausführungsbeispiel gilt für eine Frequenz $f_1$, die eine Bandmitte des ersten Nutzfrequenzbandes beschreibt, für eine Frequenz $f_2$, die eine Bandmitte des zweiten Nutzfrequenzbandes beschreibt, und für die Frequenz $f_{LO1}$ des ersten Lokaloszillators eine der folgenden Beziehungen:

$$f_2 + 0,15 \ (f_1 - f_2) \leq f_{LO1} \leq f_2 + 0,35 \ (f_1 - f_2)$$

oder

$$f_2 + 0,65 \ (f_1 - f_2) \leq f_{LO1} \leq f_2 + 0,85 \ (f_1 - f_2).$$

Dabei wird angenommen, dass die Frequenz $f_2$ kleiner als die Frequenz $f_1$ ist.

Durch die entsprechende Wahl der Frequenz des ersten Lokaloszillatorsignals ist gewährleistet, dass Spiegelbänder des ersten Nutzfrequenzbandes und des zweiten Nutzfrequenzbandes in dem Empfangssignal möglichst weit von dem ersten Nutzfrequenzband und dem zweiten Nutzfrequenzband entfernt sind, und somit in besonders effizienter Weise durch ein Vorselektions-Filter entfernt werden können.

Bei einem weiteren bevorzugten Ausführungsbeispiel ist die Frequenz des zweiten Lokaloszillatorsignals so gewählt, dass sich die Frequenz des zweiten Lokaloszillatorsignals von dem Mittelwert zwischen einer Mittenfrequenz des ersten Signalanteils und einer Mittenfrequenz des zweiten Signalanteils um höchstens 20 % unterscheidet. Durch eine solche Wahl wird eine besonders niedrige zweite Zwischenfrequenz gewährleistet. Im Übrigen wird zudem sichergestellt, dass der Informationsinhalt des ersten Nutzfrequenzbandes und der Informationsinhalt des zweiten Nutzfrequenzbandes mit besonders guter Isolation voneinander getrennt werden können, da durch die genannte Wahl der Frequenz des zweiten Lokaloszillatorsignals der erste Signalanteil und der zweite Signalanteil frequenzmäßig ausreichend symmetrisch um das zweite Lokaloszillatorsignal angeordnet sind.

Bei einem weiteren bevorzugten Ausführungsbeispiel ist der Signalaufbereiter ausgelegt, um das erste Ausgangssignal oder ein davon abgeleitetes Signale mit einer Abtastfrequenz abzutasten und analog-zu-digital zu wandeln, um ein erstes digitalisiertes Signal zu erhalten, und um das zweite Ausgangssignal oder ein davon abgeleitetes Signal mit der Abtastfrequenz abzutasten und analog-zu-digital zu wandeln, um ein zweites digitalisiertes Signal zu erhalten. Die Abtastfrequenz weicht bevorzugt von einem Vierfachen einer Zwischenfrequenz, auf die der zweite Mischer das durch den ersten Mischer erzeugte Abbild des ersten Nutzfrequenzbandes und das durch den ersten Mischer erzeugte Abbild des zweiten Nutzfrequenzbandes abbildet, um höchstens 20 % ab. Es hat sich nämlich gezeigt, dass durch die genannte Wahl der Abtastfrequenz eine weitere Frequenzumsetzung von der zweiten Zwischenfrequenz-Ebene, auf die der zweite Mischer den Informationsinhalt des ersten Nutzfrequenzbandes und den Informationsinhalt des zweiten Nutzfrequenzbandes abbildet, in ein Basisband in besonders effizienter und präziser Weise möglich ist. Im Übrigen hat sich gezeigt, dass durch eine Wahl der Abtastfrequenz als ein Vierfaches der zweiten Zwischenfrequenz eine Unterabtastung sicher vermieden werden kann, da die Bandbreite des sich nach der zweiten Mischung (also nach dem Mischen durch den zweiten Mischer) ergebenden Signals nach oben hin auf ein Zweifaches der zweiten Zwischenfrequenz begrenzt ist.

Bei einem weiteren bevorzugten Ausführungsbeispiel ist daher der Signalaufbereiter aufgelegt, um das erste digitalisierte Signal in ein Basisband herunterzumischen, und um das zweite digitalisierte Signal in ein Basisband herunterzumischen. Dabei wird es bevorzugt, von den Signalwerten des ersten digitalisierten Ausgangssignals jeden zweiten Abtastwert zu Null zu setzen oder zu entfernen, und die übrigen Abtastwerte abwechselnd mit +1 oder -1 zu gewichten, um ein Inphase-Ausgangssignal zu erhalten. Ferner wird es bevorzugt, aus dem ersten digitalisierten Ausgangssignal, zeitlich um einen Abtastschritt gegenüber der Berechnung des ersten Inphase-Signals verschoben, jeden zweiten Abtastwert zu Null zu setzen oder zu entfernen, und die übrigen Abtastwerte abwechselnd mit +1 oder -1 zu gewichten, um ein erstes Quadratur-Ausgangssignal zu erhalten. Durch die genannte Verarbeitung wird erreicht, dass aus dem ersten digitalisierten Ausgangssignal sowohl ein Inphase-Signal als auch ein Quadratursignal erzeugt werden. Eine besonders einfache Verarbeitung ergibt sich dabei durch ein Zu-Null-Setzen jedes zweiten Abtastwertes, und durch ein abwechselndes Gewichten der übrigen Abtastwerte mit zueinander inversen Werte (z. B. abwechselnd mit +1 und -1). Die entsprechende Gewichtung entspricht gleichzeitig einer Frequenzumsetzung und einer Transformation in zwei komplexe Signale (also in ein Inphase-Signal und ein Quadratur-Signal). Ein Zu-Null-Setzen kann dabei in besonders einfacher und recheneffizienter Weise erfolgen. Ferner wird durch eine abwechselnde Gewichtung mit zwei zueinander inversen Werten ein Verarbeitungsaufwand gering gehalten, und es werden ferner Rundungsfehler minimiert. Im Übrigen sei darauf hingewiesen, dass das erste Inphase-Ausgangssignal und das zweite Inphase-Ausgangssignal jeweils nur noch die halbe Datenrate des ersten digitalisierten Ausgangssignals aufweisen, so dass eine Gesamt-Datenrate bei der Erzeugung des ersten Inphase-Ausgangssignals und des ersten Quadratur-Ausgangssignals gegenüber dem digitalisierten Ausgangssignal nicht erhöht wird.

Die vorliegende Erfindung schafft ferner ein Verfahren gemäß dem Anspruch 24.

Im Übrigen sei darauf hingewiesen, dass weitere vorteilhafte Ausführungsbeispiele der vorliegenden Erfindung durch die abhängigen Patentansprüche definiert sind.

Bevorzugte Ausführungsbeispiele der vorliegenden Erfindung werden nachfolgend Bezug nehmend auf die beiliegenden Zeichnungen näher erläutert. Es zeigen:

Fig. 1 ein Blockschaltbild eines erfindungsgemäßen Signalaufbereiters gemäß einem Ausführungsbeispiel der vorliegenden Erfindung, zusammen mit einer Darstellung der auftretenden Frequenz-Relationen;

Fig. 2 ein Blockschaltbild eines erfindungsgemäßen Signalaufbereiters gemäß einem Ausführungsbeispiel der vorliegenden Erfindung;

Fig. 3 eine schematische Darstellung eines Frequenzplans beim Betrieb eines erfindungsgemäßen Signalaufbereiters; und

Fig. 4 ein Flussdiagramm eines erfindungsgemäßen Verfahrens zum Verarbeiten eines Empfangssignals.

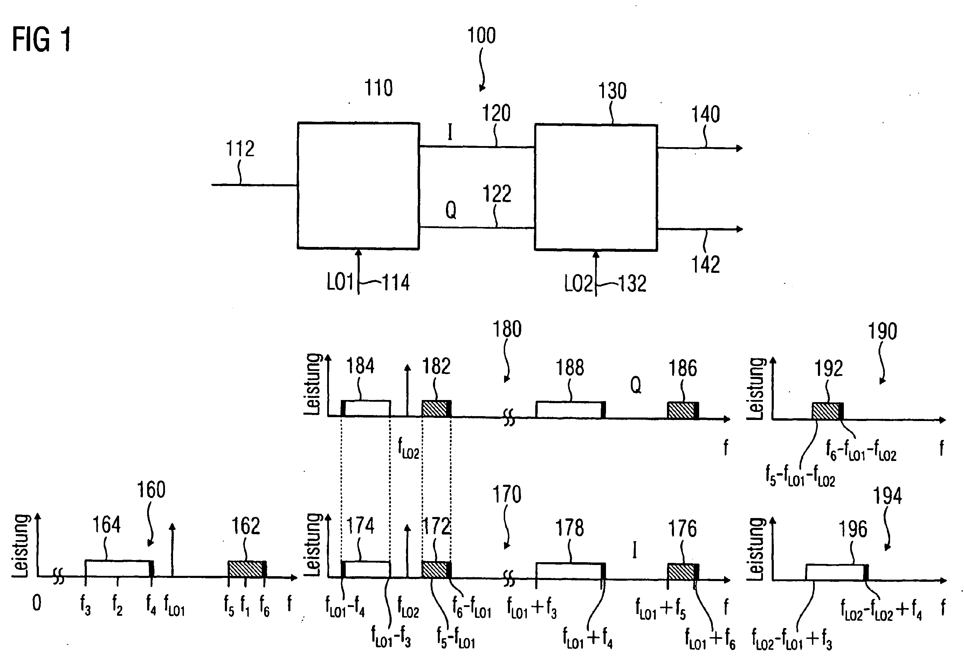

Fig. 1 zeigt ein Blockschaltbild eines erfindungsgemäßen Signalaufbereiters zum Verarbeiten eines Empfangssignals mit einem ersten Nutzfrequenzband und einem zweiten Nutzfrequenzband, gemäß einem Ausführungsbeispiel der vorliegenden Erfindung. Der Signalaufbereiter gemäß der Fig. 1 ist in seiner Gesamtheit mit 100 bezeichnet. Ein erster Mischer 110 empfängt ein Empfangssignal 112 sowie ein erstes Lokaloszillatorsignal 114. Der erste Mischer 110 ist ausgelegt, um das Empfangssignal 112 mit dem ersten Lokaloszillatorsignal zu mischen, wobei eine Frequenz des ersten Lokaloszillatorsignals unsymmetrisch zwischen dem ersten Nutzfrequenzband und dem zweiten Nutzfrequenzband liegt. Der erste Mischer 110 ist ausgelegt, um ein Inphase-Signal 120 (I) und ein Quadratursignal 122 (Q) zu erzeugen. Der Signalaufbereiter 100 umfasst ferner einen zweiten Mischer 130, der ausgelegt ist, um das Inphase-Signal 120, das Quadratur-Signal 122 und ein zweites Lokaloszillatorsignal 132 zu empfangen. Dabei ist eine Frequenz des zweiten Lokaloszillatorsignals 132 so gewählt, dass das gemischte Abbild des ersten Nutzfrequenzbandes und das gemischte Abbild des zweiten Nutzfrequenzbandes bezüglich des zweiten Lokaloszillatorsignals zumindest teilweise Spiegelbänder zueinander sind. Der zweite Mischer ist im Übrigen ausgelegt, um an seinem Ausgang ein erstes Ausgangssignal 140 bereitzustellen, das im Wesentlichen einen Informationsinhalt des ersten Nutzfrequenzbandes umfasst, und um weiterhin ein zweites Ausgangssignal 142 bereitzustellen, das im Wesentlichen einen Informationsinhalt des zweiten Nutzfrequenzbandes umfasst. In anderen Worten, der Mischer 130 ist ausgelegt, um an seinen Ausgängen zwei Ausgangssignale 140, 142 bereitzustellen, die Informationsinhalte des ersten Nutzfrequenzbandes und des zweiten Nutzfrequenzbandes getrennt enthalten.

Basierend auf der obigen strukturellen Beschreibung wird im Folgenden die Funktionsweise des Signalaufbereiters 100 beschrieben. Dabei werden insbesondere die Spektren der auftretenden Nutzsignale bzw. der daraus erzeugten Abbilder zur Erläuterung herangezogen.

Im Folgenden werden zunächst die in dem Empfangssignal 112 enthaltenen Nutzfrequenzbänder anhand einer spektralen Darstellung 160 erläutert. Es sei im Übrigen darauf hingewiesen, dass die im Folgenden erläuterten spektralen Darstellungen nicht maßstabsgerecht sind. Allerdings stimmen typischerweise Frequenz-Relationen ("größer, kleiner, zwischen") in den spektralen Darstellungen mit tatsächlich sich ergebenden Frequenzrelationen überein.

Im Übrigen sei darauf hingewiesen, dass in den spektralen Darstellungen an einer Abszisse jeweils eine Frequenz angetragen ist, während eine Ordinate eine spektrale Leistungsdichte in nicht-maßstabsgerechter Form zeigt, wie dies aus der Signaldarstellung bekannt ist.

Das Empfangssignal 112 umfasst entsprechend der spektralen Darstellung 160 ein erstes Nutzfrequenzband 162. Das erste Nutzfrequenzband 162 kann dabei beispielsweise als ein Frequenzband angesehen werden, dessen Informationsinhalt durch den erfindungsgemäßen Signalaufbereiter für eine Weiterverarbeitung zur Verfügung gestellt werden soll. Das Empfangssignal 112 umfasst ferner ein zweites Nutzfrequenzband 164, dessen Informationsinhalt ebenso durch den erfindungsgemäßen Signalaufbereiter an einem Ausgang für eine weitere Verarbeitung zur Verfügung gestellt werden soll.

Es sei im Übrigen darauf hingewiesen, dass in den spektralen Darstellungen der Fig. 1 das erste Frequenzband 162 sowie dessen durch die Mischungen entstehende Abbilder schraffiert gezeichnet sind, während hingegen das zweite Frequenzband 164 und dessen Abbilder nicht schraffiert gezeigt ist. Im Übrigen sei darauf hingewiesen, dass ein frequenzmäßig oberes Ende des ersten Frequenzbandes 162 durch eine dicke Linie gekennzeichnet ist, und dass ferner auch ein frequenzmäßig oberes Ende des zweiten Frequenzbandes 164 durch eine dicke Linie gekennzeichnet ist. Ferner sei darauf hingewiesen, dass das erste Frequenzband 162 eine untere Frequenzgrenze $f_5$ und eine obere Frequenzgrenze $f_6$ aufweist. In anderen Worten, das erste Nutzfrequenzband 162 erstreckt sich von der Frequenz $f_5$

bis hin zu der Frequenz $f_6$ (die Frequenzen $f_5$ und $f_6$ eingeschlossen). Ferner kennzeichnet eine Frequenz $f_1$ eine Mittenfrequenz des ersten Frequenzbandes 162. Die Frequenz $f_1$ ist somit beispielsweise der Mittelwert der Frequenzen $f_5$ und $f_6$.

Das zweite Frequenzband 164 weist eine untere Frequenzgrenze bei der Frequenz $f_3$ und ferner eine obere Frequenzgrenze bei der Frequenz $f_4$ auf. In anderen Worten, das zweite Nutzfrequenzband 164 erstreckt sich zwischen der Frequenz $f_3$ und der Frequenz $f_4$. Das zweite Nutfrequenzband 164 weist ferner eine Mittenfrequenz $f_2$ auf, wobei die Mittenfrequenz $f_2$ des zweiten Frequenzbandes 164 beispielsweise gleich einen Mittelwert der Grenzfrequenzen $f_3$ und $f_4$ ist.

Es werde im Folgenden angenommen, dass es die Aufgabe des Signalaufbereiters 100 ist, die Informationsinhalte des ersten Frequenzbands 162 und des zweiten Frequenzbandes 164 an den Ausgängen 140, 142 für eine weitere Verarbeitung zur Verfügung zu stellen, und dass der Signalaufbereiter 100 im Übrigen mit einer Auswerteinrichtung gekoppelt ist, die ausgelegt ist, um die Informationsinhalte des ersten Nutzfrequenzbandes 162 und es zweiten Nutzfrequenzbandes 164 zeitlich gleichzeitig oder nacheinander auszuwerten.

Eine Frequenz des ersten Lokaloszillatorsignals 114 ist im Übrigen mit $f_{LO1}$ bezeichnet, und ist unsymmetrisch zwischen dem ersten Frequenzband 162 und dem zweiten Frequenzband 164 gewählt. In anderen Worten, die Frequenz $f_{LO1}$ des ersten Lokaloszillatorsignals 114 liegt unsymmetrisch zwischen der Mittenfrequenz $f_1$ des ersten Frequenzbandes 162 und der Mittenfrequenz $f_2$ des zweiten Frequenzbandes 164 und/oder unsymmetrisch zwischen der unteren Grenzfrequenz $f_5$ des ersten Nutzfrequenzbandes 162 und der oberen Grenzfrequenz $f_4$ des zweiten Nutzfrequenzbandes 164.

Der erste Mischer 110 ist ausgelegt, um das Empfangssignal mit dem ersten Lokaloszillatorsignal 114 zu mischen, um das Inphase-Signal 120 und das Quadratursignal 122 zu erhalten. In anderen Worten, der Mischer 110 ist ausgelegt, um das Empfangssignal 112 mit zwei zueinander phasenverschobenen Versionen des ersten Lokaloszillatorsignals 114 zu mischen, wobei die Phasenverschiebung zwischen den phasenverschobenen Versionen des ersten Lokaloszillatorsignals 114 typischerweise zwischen 70 Grad und 110 Grad liegt, und idealerweise 90 Grad beträgt. In anderen Worten, der Mischer 110 ist ausgelegt, um das Inphase-Signal durch Mischung des Empfangssignals 112 mit einer ersten Version des Lokaloszillatorsignals 114 zu erzeugen, und um das Quadratursignal 122 durch Mischung mit einer gegenüber der ersten Version des Lokaloszillatorsignals 114 um 90 Grad verschobenen zweiten Version des Lokaloszillatorsignals zu erzeugen.

Eine spektrale Darstellung 170 zeigt die in dem Inphase-Signal 120 enthaltenen Signalanteile, und eine spektrale Darstellung 180 zeigt die in dem Quadratursignal 122 enthaltenen spektralen Anteile.

Der Mischer 110 ist ausgelegt, um das Inphase-Signal 120 so zu erzeugen, dass das Inphase-Signal einen ersten Signalanteil aufweist, der ein gemischtes Abbild des ersten Nutzfrequenzbands 162 ist, und dass das Inphase-Signal 120 ferner einen zweiten Signalanteil aufweist, der ein gemischtes Abbild des zweiten Nutzfrequenzbandes 164 ist. Der erste Signalanteil, also das Abbild des ersten Nutzfrequenzbandes 162, ist in der spektralen Darstellung 170 mit 172 bezeichnet. Der erste Signalanteil 172 ist im Übrigen ein abwärts-gemischtes Abbild des ersten Nutzfrequenzbandes 162. Entsprechend weist der erste Signalanteil 172 eine untere Grenzfrequenz von $f_5 - f_{LO1}$ sowie eine obere Grenzfrequenz von $f_6 - f_{LO1}$ auf.

Der zweite Signalanteil, der ein gemischtes Abbild des zweiten Nutzfrequenzbandes 164 ist, ist in der spektralen Darstellung 170 im Übrigen mit 174 bezeichnet. Da die Frequenz des ersten Lokaloszillatorsignals $f_{LO1}$ typischerweise oberhalb des zweiten Nutzfrequenzbandes 164 liegt, kommt es bei der Erzeugung des Abbildes 174 zu einer Inversion der Frequenzen, wie dies aus der Nachrichtentechnik bekannt ist. Der zweite Signalanteil 174 weist eine untere Grenzfrequenz von $f_{LO1} - f_4$ und eine obere Grenzfrequenz von $f_{LO1} - f_3$ auf.

Die spektrale Darstellung 170 zeigt ferner noch weitere Abbilder des ersten Nutzfrequenzbandes 162 und des zweiten Nutzfrequenzbandes 164. Beispielsweise ist in der spektralen Darstellung 170 ein aufwärts-gemischtes Abbild des ersten Nutzfrequenzbandes 162 mit 176 bezeichnet. Das aufwärts-gemischte Abbild 176 des ersten Nutzfrequenzbandes 172 weist eine untere Grenzfrequenz von $f_{LO1} + f_5$ und eine obere Grenzfrequenz von $f_{LO1} + f_6$ auf. Ferner entsteht in dem ersten Mischer 110 typischerweise ein aufwärts-gemischtes Abbild 178 des zweiten Nutzfrequenzbandes 164, das eine untere Grenzfrequenz von $f_{LO1} + f_3$ und eine obere Grenzfrequenz von $f_{LO1} + f_4$ aufweist.

Es sei im Übrigen darauf hingewiesen, dass für die weitere Signalverarbeitung bevorzugt (aber nicht notwendigerweise) das abwärts-gemischte Abbild 172 des ersten Nutzfrequenzbandes 162 und das abwärts-gemischte Abbild 174 des zweiten Nutzfrequenzbandes 164 verwendet werden. Das aufwärts-gemischte Abbild 176 des ersten Nutzfrequenzbandes 162 und das aufwärts-gemischte Abbild 178 des zweiten Nutzfrequenzbandes 164 können beispielsweise in dem Inphase-Signal 120 noch enthalten sein. Es wird allerdings bevorzugt, durch ein in dem ersten Mischer 110 befindliches Tiefpassfilter beispielsweise die aufwärts-gemischten Abbilder 176, 178 des ersten Nutzfrequenzbandes 162 und des zweiten Nutzfrequenzbandes 164 herausfiltert bzw. im Vergleich zu den abwärts-gemischten Abbildern 172, 174 bedämpft. Ein solches optionales Tiefpassfilter kann im Übrigen alternativ auch in dem Eingang des zweiten Mischers 130 enthalten sein.

Ein Spektrum des Quadratur-Signals 122 entscheidet sich im Hinblick auf eine spektrale Energieverteilung nicht wesentlich von einem Spektrum des Inphase-Signals 120. Das Spektrum des Quadratursignals 122 ist im Übrigen in einer spektralen Darstellung 180 gezeigt. Das Quadratursignal 122 umfasst einen ersten Signalanteil 182, der dem ersten Signalanteil 172 in dem Inphase-Signal 120 entspricht, und der ein abwärts-gemischtes Abbild des ersten Nutzfrequenzbandes 162 darstellt. Das Quadratur-Signal 122 umfasst ferner einen zweiten Signalanteil 184, der dem zweiten Signalanteil 174 des Inphase-Signals 120 entspricht, und der ein abwärts-gemischtes Abbild des zweiten Nutzfrequenzbands 164 darstellt. Das Quadratur-Signal 122 umfasst ferner ein aufwärts-gemischtes Abbild 186 des ersten Nutzfrequenzbandes 162, sowie ein aufwärts-gemischtes Abbild 188 des zweiten Nutzfrequenzbandes 164.

Es sei im Übrigen darauf hingewiesen, dass die Frequenz des ersten Lokaloszillatorsignals 114 bevorzugt asymmetrisch zwischen dem ersten Nutzfrequenzband 162 und dem zweiten Nutzfrequenzband 164 gewählt ist, um sicherzustellen, dass sich der erste Signalanteil 172 in dem Inphase-Signal 120 und der zweite Signalanteil 174 in dem Inphase-Signal 120, frequenzmäßig nicht überlappen. Dies wird beispielsweise dann erreicht, wenn gilt:

$$f_{LO1} < (f_3 + f_5)/2, \text{ oder } f_{LO1} > (f_4 + f_6)/2.$$

Es sei im Übrigen darauf hingewiesen, dass das abwärts-gemischte Abbild 172 des ersten Nutzfrequenzbands 162 frequenzmäßig oberhalb oder frequenzmäßig unterhalb des abwärts-gemischten Abbilds 174 des zweiten Nutzfrequenzbands 164 liegen kann. Dies ist abhängig davon, ob die Frequenz $f_{LO1}$ des ersten Lokaloszillatorsignals 114 näher bei dem ersten Nutzfrequenzband 162 oder näher bei dem zweiten Nutzfrequenzband 164 liegt.

Der zweite Mischer 130 ist ferner ausgelegt, um das Inphase-Signal 120 (oder eine gefilterte Version davon) und das Quadratursignal 122 (oder eine gefilterte Version davon) zu empfangen und unter Verwendung des zweiten Lokaloszillatorsignals 132 zu mischen. Die Frequenz $f_{LO2}$ des zweiten Lokaloszillatorsignals 132 ist dabei so gewählt, dass das gemischte (bzw. abwärts-gemischte) Abbild 172 des ersten Nutzfrequenzbands 162 und das gemischte (bzw. abwärts-gemischte) Abbild 174 des zweiten Nutzfrequenzbands 164 zumindest teilweise Spiegelbänder zueinander sind. In anderen Worten, die Frequenz $f_{LO2}$ des zweiten Lokaloszillatorsignals 132 ist so gewählt, dass der erste Signalanteil 172 und der zweite Signalanteil 174 durch eine Mischung unter Verwendung des zweiten Lokaloszillatorsignals auf zumindest teilweise überlappende Frequenzbereiche abgebildet werden. Dies ist beispielsweise der Fall, wenn sich die Frequenzintervalle $[f_5 - f_{LO1} - k_{LO2}; f_6 - f_{LO1} - f_{LO2}]$ und $[f_{LO2} - f_{LO1} + f_3; f_{LO2} - f_{LO1} + f_4]$ überlappen. Alternativ dazu ist die Bedingung auch erfüllt, wenn sich die Frequenzintervalle $[f_{LO2} - f_{LO1} - f_4; f_{LO2} - f_{LO1} - f_3]$ und $[f_{LO2} + f_{LO1} - f_6; f_{LO2} + f_{LO1} - f_5]$ überlappen.

Beispielsweise wird es bevorzugt, für die Frequenz $f_{LO2}$ des zweiten Lokaloszillatorsignals 132 eine Frequenz in der Mitte zwischen der Mitte des ersten Signalanteils 172 und der Mitte des zweiten Signalanteils 174 zu wählen. Bei einer bevorzugten Wahl gilt:

$$f_{LO2} = 1/2 \; ( \; (f_5 + f_6 - 2 \; f_{LO1})/2 + (2 \; f_{LO1} - f_3 - f_4)/2).$$

Eine Abweichung von $\pm 20\ \%$ ist in diesem Beispiel tolerierbar.

Bei einem weiteren bevorzugten Ausführungsbeispiel wird die Frequenz $f_{LO2}$ des zweiten Lokaloszillatorsignals 132 so gewählt, dass gilt:

$$f_{LO2} = (f_5 - f_3)/2.$$

Auch hier ist eine Abweichung von +/-20 %, bevorzugt aber von nicht mehr als +/-10 % tolerierbar.

Bei einem weiteren bevorzugten Ausführungsbeispiel wird die Frequenz $f_{LO2}$ gewählt, dass gilt:

$$f_{LO2} = (f_6 - f_4)/2.$$

Hierbei ist eine Abweichung der Frequenz $f_{LO2}$ des zweiten Lokaloszillatorsignals von einem idealen Wert um +/-20 %, bevorzugt aber von nicht mehr als +/-10 % tolerierbar.

Es sei im Übrigen darauf hingewiesen, dass das erfindungsgemäße Konzept bevorzugt bei schmalbandigen Übertragungssystemen eingesetzt wird, bei denen gilt:

$$f_4 - f_3 \leq 0{,}1\ (f_3 + f_4)/2,$$

oder bevorzugt

$$f_4 - f_3 \leq 0{,}01\ (f_3 + f_4)/2$$

und

$$f_6 - f_5 \leq 0{,}1\ (f_5 + f_6)/2,$$

oder bevorzugt

$$f_6 - f_5 \leq 0{,}1\ (f_5 + f_6)/2.$$

Der zweite Mischer 130 ist also ausgelegt, um das oben beschriebene Inphase-Signal 120 und das oben beschriebene Quadratur-Signal 122 mit dem zweiten Lokaloszillatorsignal 132 zu mischen. Der zweite Mischer 130 ist ferner bevorzugt ausgelegt, um die Mischung derart durchzuführen, dass an dem ersten Ausgang 140 und dem zweiten Ausgang 142 Signale anliegen, in denen die Informationsinhalte des ersten Nutzfrequenzbands 162 und des zweiten Nutzfrequenzbands 164 getrennt voneinander enthalten sind. In anderen Worten, in dem ersten Ausgangssignal 140 ist beispielsweise im Wesentlichen der Informationsinhalt des ersten Nutzfrequenzbands 162 enthalten, während in dem ersten Ausgangssignal 142 der Informationsinhalt des zweiten Nutzfrequenzbands 164 unterdrückt bzw. gegenüber dem Informationsinhalt des ersten Nutzfrequenzbands 162 gedämpft ist. In dem zweiten Ausgangssignal 142 hingegen ist im Wesentlichen der Informationsinhalt des zweiten Nutzfrequenzbands 164 enthalten, während hingegen der Informationsinhalt des ersten Nutzfrequenzbands 162 in dem zweiten Ausgangssignal 142 unterdrückt oder im Hinblick auf den Informationsinhalt des zweiten Nutzfrequenzbands gedämpft ist.

Dies kann durch den ersten Mischer 130 beispielsweise durch Mischung des Inphase-Signals 120 und des Quadratur-Signals 122 mit dem zweiten Lokaloszillatorsignal 132 und durch eine anschließende Kombination der durch die zweite Mischung entstehenden Signale erreicht werden. Durch die Tatsache, dass der erste Signalanteil 172 und der zweite Signalanteil 174 in dem Inphase-Signal 120 bzw. der erste Signalanteil 182 und der zweite Signalanteil 184 in dem Quadratursignal 122 zumindest teilweise Spiegelbänder zueinander sind, können die genannten Signalanteile durch eine gemeinsame Verarbeitung auf eine besonders niedrige Zwischenfrequenz abgebildet werden, wobei im Übrigen die ersten Signalanteile 172, 182 und die zweiten Signalanteile 174, 184 auf einen niedrigen Zwischenfrequenzbereich abgebildet werden, was eine anschließende digitale Verarbeitung erleichtert. Eine spektrale Darstellung 190 beschreibt beispielsweise den Informationsinhalt des ersten Ausgangssignals 140. In dem ersten Ausgangssignal 140 ist im Wesentlichen der Informationsinhalt des ersten Nutzfrequenzbands 162 enthalten. Der Informationsinhalt des ersten Nutzfrequenzbands 162 ist dabei auf eine niedrige Zwischenfrequenz heruntergemischt, so dass beispielsweise eine maximale in dem ersten Ausgangssignal 140 auftretende Frequenz höchstens das Doppelte der Bandbreite des ersten Nutzfrequenzbands 162 oder des zweiten Nutzfrequenzbands 164 beträgt. In analoger Weise umfasst das zweite Ausgangssignal 142 im Wesentlichen den Informationsinhalt des zweiten Nutzfrequenzbands 164, heruntergemischt auf eine niedrige zweite Zwischenfrequenz. In anderen Worten, eine höchste in dem zweiten Ausgangssignal 142 auftretende Frequenz ist bevorzugt nicht größer als das Doppelte der Bandbreite des ersten Nutzfrequenzbands 162 oder des zweiten Nutzfrequenzbands 164.

Es sei im Übrigen darauf hingewiesen, dass die zweite Zwischenfrequenz beispielsweise als die Bandmitte des Abbilds des ersten Nutzfrequenzbands 162 in dem ersten Ausgangssignal 140 definiert ist. Alternativ dazu ist die zweite Zwischenfrequenz als die Bandmitte des Abbilds 196 des zweiten Nutzfrequenzbands 164 in dem zweiten Ausgangssignal 142 definiert. Eine Toleranz von +/-20% ist im Hinblick auf diese Definitionen zulässig.

Ferner sind bevorzugt die Frequenz $f_{LO1}$ des ersten Lokaloszillatorsignals 114 an die Frequenz $f_{LO2}$ des zweiten Lokaloszillatorsignals 132 so gewählt, dass die Bandmitte des Abbilds 192 des ersten Nutzfrequenzbands 162 in dem ersten Ausgangssignal 140 frequenzmäßig um nicht mehr als 20 % (bevorzugt aber um nicht mehr als 10 %) von einer Bandmitte des Abbilds 196 des zweiten Nutzfrequenzbands 164 in dem zweiten Ausgangssignal 142 abweicht.

Ferner sei darauf hingewiesen, dass prinzipiell eine Bereitstellung der Ausgangssignale 140, 142, unter Verwendung verschiedener (bevorzugt komplexer) Mischerarchitekturen erfolgen kann. Neben einem Einsatz einer Weaver-Architektur kann alternativ beispielsweise eine Hartley-Topologie verwendet werden. Es sind aber auch andere Schaltungsstrukturen möglich, um basierend auf dem Inphase-Signal 120 und dem Quadratur-Signal 122 Ausgangssignale zu erhalten, in denen Die Informationsinhalte der Nutzfrequenzbänder getrennt vorliegen.

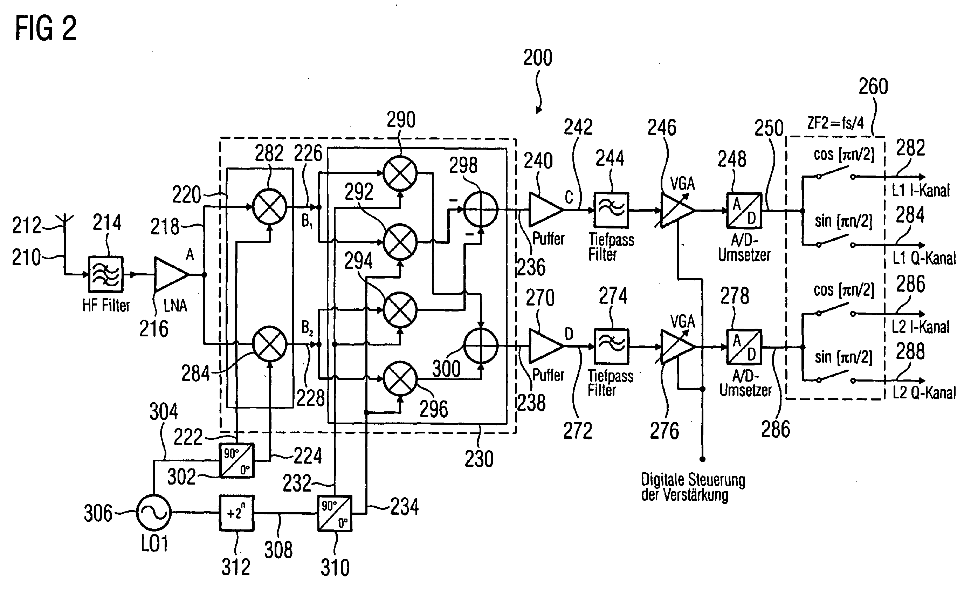

Basierend auf der obigen funktionellen Beschreibung des Signalaufbereiters 100 wird im Folgenden anhand der Fig. 2 ein Beispiel für eine konkrete Implementierung des erfindungsgemäßen Signalaufbereiters beschrieben. Fig. 2 zeigt zu diesem Zweck ein Blockschaltbild eines erfindungsgemäßen Signalaufbereiters gemäß einem Ausführungsbeispiel der vorliegenden Erfindung. Der Signalaufbereiter gemäß der Fig. 2 ist in seiner Gesamtheit mit 200 bezeichnet.

Der Signalaufbereiter 200 empfängt ein Eingangssignal 210, beispielsweise von einer Mehrbandantenne 212. Die Mehrbandantenne 212 ist beispielsweise ausgelegt, um Frequenzen des ersten Nutzfrequenzbands 162 und des zweiten Nutzfrequenzbands 164 zu empfangen. Der Signalaufbereiter 200 umfasst ferner ein (optionales) Hochfrequenzfilter 214, das das Empfangssignal 210 empfängt, und das ausgelegt ist, um das erste Nutzfrequenzband 162 und das zweite Nutzfrequenzband 164 passieren zu lassen, und um beispielsweise Frequenzen, die außerhalb des ersten Nutzfrequenzbands 162 und des zweiten Nutzfrequenzbands 164 liegen, zu bedämpfen.

Ein (optionaler) Verstärker 216 mit geringem Rauschen (low noise amplifier LNA) empfängt ein von dem Hochfrequenzfilter 214 basierend auf dem Eingangssignal 210 erzeugtes Signal und verstärkt dieses. Der Verstärker 216 mit geringem Rauschen stellt somit ein Empfangssignal 218 bereit, das auch mit A bezeichnet ist. Der Signalaufbereiter 200 umfasst ferner einen ersten Mischer 220. Der erste Mischer 220 empfängt das Empfangssignal 218 sowie ferner zumindest ein Lokaloszillatorsignal 222. Es wird allerdings bevorzugt, dass der erste Mischer 220 zwei zueinander um etwa 90 Grad (bzw. in einem Bereich zwischen 70 Grad und 110 Grad) verschobene Lokaloszillatorsignale 222, 224 empfängt. Der erste Mischer 220 erzeugt somit basierend auf dem Empfangssignal 218 und den Lokaloszillatorsignalen 222, 224 ein Inphase-Signal 226 (auch mit $B_1$ bezeichnet) sowie ein Quadratur-Signal 228 (auch mit $B_2$ bezeichnet). Ein zweiter Mischer 230 empfängt das Inphase-Signal 226 und das Quadratur-Signal 228, sowie ferner zumindest ein zweites Lokaloszillatorsignal 232. Bevorzugt empfängt der zweite Mischer 232 allerdings zwei zueinander um etwa 90 Grad (bzw. in einem Bereich zwischen 70 Grad und 110 Grad) phasenverschobene Lokaloszillatorsignale 232, 234. Der zweite Mischer 230 erzeugt basierend auf dem Inphase-Signal 226, dem Quadratur-Signal 228 und den beiden Lokaloszillatorsignalen 232, 234 ein erstes Ausgangssignal 236 sowie ein zweites Ausgangssignal 238. Das erste Ausgangssignal 236 dient als Eingangssignal für eine Pufferverstärker bzw. Puffer 240. Das Ausgangssignal des Puffers ist mit 242 bzw. B bezeichnet. Das Ausgangssignal 242 des Puffers 240 wird ferner einem Tiefpassfilter 244 zugeführt. Ein Ausgangssignal des Tiefpassfilters 244 wird ferner einem Verstärker 246 mit einstellbarer Verstärkung zugeführt. Ein Ausgangssignal des Verstärkers 246 mit einstellbarer Verstärkung wird ferner einem Analog-Digital-Umsetzer 248 zugeführt. Der Analog-Digital-Umsetzer 248 liefert ein digitalisiertes, zeitdiskretes und wertdiskretes Signal 250 für eine digitale Nachverarbeitung 260. Das zweite Ausgangssignal 238 des ersten Mischers 230 wird im Übrigen einem zweiten Puffer 270 zugeführt. Ein Ausgangssignal 272 (auch mit D bezeichnet) des zweiten Puffers 270 wird ferner über ein zweites Tiefpass-Filter 274 einem zweiten Verstärker 276 mit einstellbarer Verstärkung als Hochfrequenz-Eingangssignal zugeführt. Ein Hochfrequenz-Ausgangssignal des zweiten Verstärkers 276 mit einstellbarer Verstärkung wird ferner einem zweiten Analog-Digital-Umsetzer 278 als ein analoges Eingangssignal zugeführt. Der zweite Analog-Digital-Umsetzer 278 stellt basierend auf dem analogen Eingangssignal ein zweites digitalisiertes Signal 280 für die digitale Weiterverarbeitung 260 bereit. Die digitale Nachverarbeitung bzw. Weiterverarbeitung 260 erzeugt basierend auf dem ersten digitalen Signal 250 ein erstes Inphase-Ausgangssignal 282 und ein erstes Quadratur-Ausgangssignal 284. Das erste Inphase-Ausgangssignal 282 und das erste Quadratur-Ausgangssignal 284 beschreiben dabei im Wesentlichen den Informationsinhalt des ersten Nutzfrequenzbandes 162. Die Nachverarbeitung 260 erzeugt ferner basierend auf dem zweiten digitalisierten Signal 280 ein zweites Inphase-Ausgangssignal 286 und ein zweites Quadratur-Ausgangssignal 288. Das zweite Inphase-Ausgangssignal 286 und das zweite Quadratur-Ausgangssignal 288 beschreiben dabei im Wesentlichen den Informationsinhalt des zweiten Nutzfrequenzbandes 164.

Basierend auf dem strukturellen Überblick über die Schaltungsanordnung 200 wird im Folgenden der Aufbau des ersten Mischers 220 sowie des zweiten Mischers 230 detailliert beschrieben.

Der erste Mischer 220 umfasst einen Inphase-Mischer 282 sowie eine Quadratur-Mischer 284. Der Inphase-Mischer 282 empfängt als ein erstes Eingangsignal das Empfangssignal 218 und ferner als ein zweites Eingangssignal das Lokaloszillatorsignal 222. Der Inphase-Mischer 282 stellt als ein Ausgangssignal das Inphase-Signal 226 zur Verfügung. Neben der reinen Mischer-Funktionalität kann der Inphase-Mischer 282 beispielsweise ferner ein Filter und/oder eine Impedanzanpassungseinrichtung enthalten, um als das Inphase-Signal 226 beispielsweise nur das abwärtsgemischte Abbild 172 des ersten Nutzfrequenzbands 162 und das abwärts-gemischte Abbild 174 des zweiten Nutzfrequenzbandes (nicht aber bzw. nur in gedämpfter Form die aufwärts-gemischten Abbilder 176, 178) auszugeben.

Der Quadraturmischer 284 empfängt als ein erstes Eingangssignal ebenso wie der Inphase-Mischer 282 das Empfangssignal 218. Der Quadraturmischer 284 empfängt ferner als ein zweites Eingangssignal das Lokaloszillatorsignal 224. Der Quadraturmischer 284 stellt ferner als ein Ausgangssignal das Quadratursignal 228 bereit. Ebenso wie der Inphase-Mischer 282 kann auch der Quadraturmischer 284 eine Filterfunktionalität umfassen, um beispielsweise nur die abwärts-gemischten Abbilder 182, 184 des ersten Nutzfrequenzbands 162 und des zweiten Nutzfrequenzbandes 164 auszugeben.

Der zweite Mischer 230 umfasst eine erste Mischeranordnung 290, eine zweite Mischeranordnung 292, eine dritte Mischeranordnung 294 und eine vierte Mischeranordnung 296. Die erste Mischeranordnung 290 empfängt als ein erstes Eingangssignal das Inphase-Signal 226 und als ein zweites Eingangssignal das Lokaloszillatorsignal 232. Die zweite Mischanordnung 292 empfängt als ein erstes Eingangssignal das Inphase-Signal 226 und als ein zweites Eingangssignal das Lokaloszillatorsignal 234. Die dritte Mischeranordnung 294 empfängt als ein erstes Einganssignal das Quadratursignal 228 und als ein zweites Eingangsignal das Lokaloszillatorsignal 232. Die vierte Mischeranordnung 296 empfängt als ein erstes Eingangssignal das Quadratursignal 228 und als ein zweites Eingangssignal das Lokaloszillatorsignal 234.

In anderen Worten, die zweite Mischeranordnung 292 und die vierte Mischeranordnung 296 empfangen das gleiche Lokaloszillatorsignal 234. Die erste Mischeranordnung 290 und die dritte Mischeranordnung 294 empfangen ferner das gleiche Lokaloszillatorsignal 232.

Der zweite Mischer 230 umfasst ferner einen ersten Kombinierer 298 sowie einen zweiten Kombinierer 300. Der erste Kombinierer bzw. Summierer 298 empfängt ein Ausgangssignal der zweiten Mischanordnung 292 sowie ein Ausgangssignal der dritten Mischeranordnung 294. Der erste Kombinierer 298 ist dabei ausgelegt, um das Ausgangssignal der ersten Mischanordnung 292 und das Ausgangssignal der dritten Mischeranordnung 294 mit gleichen, vorzugsweise negativen, Vorzeichen zu Kombinieren bzw. zu addieren oder zu summieren. Der erste Kombinierer bzw. Addierer oder Summierer 298 bildet als Ausgangssignal, d. h. als Ergebnis der Addition bzw. der Summation, das erste Ausgangssignal 236. Der zweite Kombinierer bzw. Addierer bzw. Summierer 300 empfängt als ein erstes Eingangssignal ein Ausgangssignal der ersten Mischeranordnung 290 sowie als ein zweites Eingangssignal ein Ausgangssignal der vierten Mischanordnung 296. Der Kombinierer bzw. Addierer bzw. Summierer 300 ist ausgelegt, um die Ausgangssignale der ersten Mischeranordnung 290 und der vierten Mischeranordnung 296 mit gleichen (vorzugsweise positiven) Vorzeichen zu addieren bzw. zu summieren. Das Ergebnis der Addition bzw. Summation stellt der zweite Kombinierer bzw. Addierer bzw. Summierer 300 als das zweite Ausgangssignal 238 bereit.

Es sei im Übrigen darauf hingewiesen, dass das Lokaloszillatorsignal 222 gegenüber dem Lokaloszillatorsignal 224 idealerweise um 90 Grad (allgemein: in einem Bereich zwischen 70 Grad und 110 Grad) phasenverschoben ist. Diese Verschiebung wird z. B. durch einen Phasenschieber 302 erzielt, der ausgelegt ist, um die Lokaloszillatorsignale 222, 224 von einem ersten Lokaloszillatorsignal 304 durch Anwenden einer Phasenverschiebung abzuleiten. In anderen Worten, der Phasenschieber 302 ist ausgelegt, um das erste Lokaloszillatorsignal 304 von einem ersten Lokaloszillator 306 zu empfangen und basierend darauf die Lokaloszillatorsignale 222, 224 zu erzeugen. Beispielsweise kann der Phasenschieber 302 ausgelegt sein, um das Lokaloszillatorsignal 224 als eine um Null Grad verschobene Version bzw. Kopie des ersten Lokaloszillatorsignals 304 zu erzeugen, und um das zweite Lokaloszillatorsignal 222 als eine um 90 Grad verschobene Kopie bzw. Version des ersten Lokaloszillatorsignals 304 zu erzeugen.

Weiterhin wird es bevorzugt, die Lokaloszillatorsignale 232, 234 von einem zweiten Lokaloszillatorsignal 308 durch einen Phasenschieber 310 abzuleiten. In anderen Worten, der Phasenschieber 310 ist ausgelegt, um das zweite Lokaloszillatorsignal 308 zu empfangen, und um das Lokaloszillatorsignal 234 als eine um Null Grad phasenverschobene Version bzw. Kopie des zweiten Lokaloszillatorsignals 308 bereitzustellen. Der Phasenschieber 310 ist ferner ausgelegt, um das Lokaloszillatorsignal 232 als eine um 90 Grad phasenverschobene Version bzw. Kopie des zweiten Lokaloszillatorsignals 308 bereitzustellen.

Im Übrigen wird es bevorzugt, das zweite Lokaloszillatorsignal 308 durch einen Frequenzteiler 312 von einem Ausgangssignal des ersten Lokaloszillators 306, beispielsweise von dem ersten Lokaloszillatorsignal 304, abzuleiten. Der Frequenzteiler 312 ist dabei bevorzugt ausgelegt, um ein Frequenzteilungsverhältnis von $2^n$ zu erzielen. In anderen Worten, der Frequenzteiler 312 empfängt ein Signal von der Frequenz des ersten Lokaloszillatorsignals 304 und teilt dessen Frequenz durch $2^n$, wobei gilt: $n \geq 1$. Dadurch wird erreicht, dass die beiden Lokaloszillatorsignale 304, 308 von einem einzigen Lokaloszillator, dem ersten Lokaloszillator 306, abgeleitet sind. Folglich sind die Lokaloszillatorsignale 222, 224, 232, 234 phasenstarr zueinander.

Es sei im Übrigen darauf hingewiesen, dass die Einstellung der Verstärkung der Verstärker 246, 276 durch eine digitale Steuerung der Verstärkung erfolgt. Die Steuerung der Verstärkung erfolgt bevorzugt synchronisiert bei den beiden Verstärkern 246, 276 durch ein gemeinsames Steuersignal.

Die Nachverarbeitung 260 führt ferner eine Quadraturabtastung der digitalisierten Signale 250, 280 durch. Eine Abtastfrequenz $f_s$ entspricht dabei einem Vierfachen einer zweiten Zwischenfrequenz, auf die das erste Nutzfrequenzband 162 und das zweite Nutzfrequenzband 164 durch den zweiten Mischer 230 abgebildet werden.

Im Hinblick auf die Quadraturabtastung wird angenommen, dass der erste Analog/Digital-Umsetzer 248 und der zweite Analog/Digital-Umsetzer 278 ausgelegt sind, um die von den Verstärkern 246, 276 gelieferten Ausgangssignale zu Zeitpunkten $n \times T_s$ (wobei $T_s = 1/f_s$) abzutasten bzw. umzusetzen. Dabei wird davon ausgegangen, dass n eine ganze Zahl darstellt, und dass eine Phasenverschiebung zwischen der Abtastung durch den ersten Analog/Digital-Umsetzer 248 und den zweiten Analog/Digital-Umsetzer 278 bestehen kann, aber nicht muss. Für eine Erzeugung des ersten Inphase-Ausgangssignals 282 wird das erste Inphase-Ausgangssignal 282 immer dann zu Null gesetzt, wenn gilt: cos (nn/2) = 0. Gilt hingegen cos (nn/2) = +/-1, so werden Abtastwerte aus dem digitalisierten Signal 250 als das erste Inphase-Ausgangssignals 282 bereitgestellt. In anderen Worten, das erste Inphase-Ausgangssignal 282 umfasst nur Werte für geradzahlige Abtast-Indices n.

Alternativ dazu kann das erste Inphase-Ausgangssignal 282 auch durch eine Multiplikation des digitalisierten Signals 250 mit cos (nn/2) erzeugt werden, wobei n, wie oben beschrieben, einen Zeit-Index der Abtastwerte beschreibt.

In einer vergleichbaren Weise wird das erste Quadratur-Ausgangssignal 284 erzeugt, indem Werte des ersten Quadratur-Ausgangssignals für geradzahlige Werte des Abtastindex n zu Null gesetzt werden, und indem für ungeradzahlige Werte des Abtastindex n Abtastwerte des ersten digitalisierten Signals 250 als das erste Quadratur-Ausgangssignal 284 ausgegeben werden.

Das Quadratur-Ausgangssignal 284 kann im Übrigen auch durch eine Multiplikation der Abtastwerte des ersten digitalisierten Signals 250 mit sin (nn/2) ( oder mit -sin(nn/2)) erzeugt werden.

Ein Zu-Null-Setzen von Werten bei der Ermittlung des ersten Inphase-Ausgangssignals 284 und des ersten Quadratur-Ausgangssignals 284 kann im Übrigen auch durch ein Entfernen der entsprechenden Werte ersetzt sein.

Die Ermittlung des zweiten Inphase-Ausgangssignals 286 und des zweiten Quadratur-Ausgangssignal 288 basierend auf dem zweiten digitalisierten Signals 280 erfolgt im Übrigen in der gleichen Weise wie die Erzeugung des ersten Inphase-Ausgangssignals 284 und des ersten Quadraturausgangssignals 284 basierend auf dem ersten digitalisierten Signal 250.

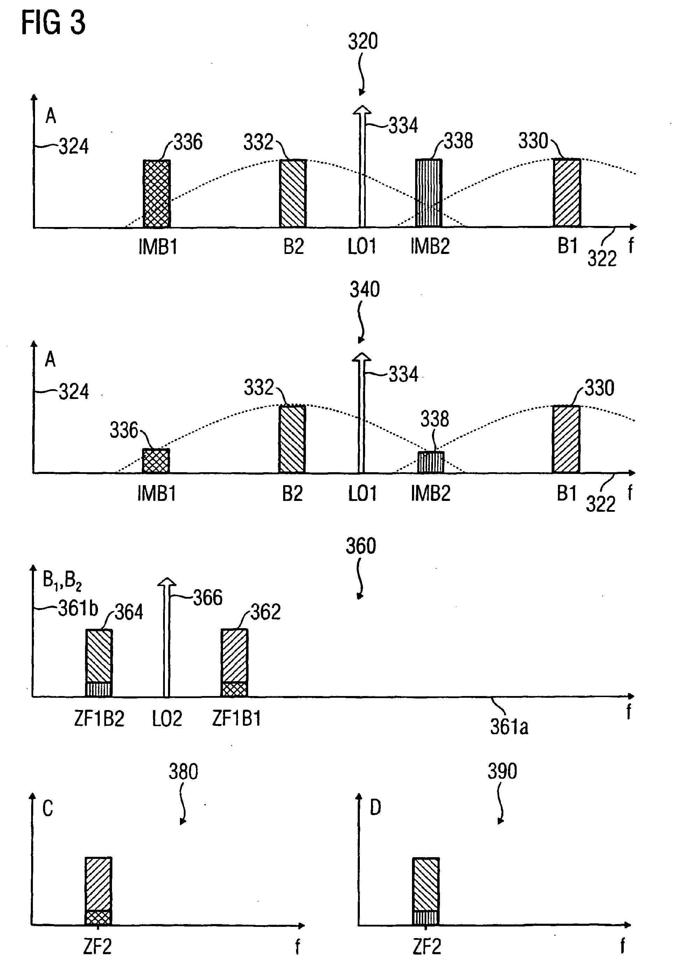

Fig. 3 zeigt im Übrigen eines spektrale Darstellung von verschiedenen Signalen in dem Signalaufbereiter 200. Eine erste spektrale Darstellung 320 beschreibt ein Spektrum des Empfangssignals 218 (auch mit Signal A bezeichnet), wie es sich ohne ein eingangsseitiges Spiegelfrequenz-Unterdrückungsfilter (also beispielsweise ohne ein Hochfrequenzfilter 214) ergibt. An einer Abszisse 322 ist dabei die Frequenz angetragen, während eine Ordinate 324 beispielsweise eine spektrale Leistungsdichte zeigt. Die spektrale Darstellung 320 zeigt ein erstes Nutzfrequenzband 330 (auch mit B1 bezeichnet), ein zweites Nutzfrequenzband 332 (auch mit B2 bezeichnet), ein erstes Lokalsoszillatorsignal 334 (auch mit LO1 bezeichnet), ein erstes Spiegelfrequenzband 336 (auch mit IMB1 bezeichnet) sowie ein zweites Spiegelfrequenzband 338 (auch mit IMB2 bezeichnet). Das erste Spiegelfrequenzband 336 ist bezüglich des ersten Lokaloszillatorsignals 334 ein Spiegelfrequenzband zu dem ersten Nutzfrequenzband 330, und das zweite Spiegelfrequenzband 338 ist bezüglich des ersten Lokaloszillatorsignals 334 ein Spiegelfrequenzband zu dem zweiten Nutzfrequenzband 332. In anderen Worten, das erste Nutzfrequenzband 330 und das erste Spiegelfrequenzband 336 liegen bezüglich der Frequenz des ersten Lokaloszillatorsignals 334 frequenzmäßig symmetrisch. Das zweite Nutzfrequenzband 332 und das zweite Spiegelfrequenzband 338 liegen ferner bezüglich der Frequenz des ersten Lokaloszillatorsignals 334 frequenzmäßig symmetrisch.

Zur Veranschaulichung ist hierbei angenommen, dass das erste Nutzfrequenzband 330, das zweite Nutzfrequenzband 332, das erste Spiegelfrequenzband 336 und das zweite Spiegelfrequenzband 338 eine gleiche Amplitude bzw. spektrale Amplitudenverteilung aufweisen.

Eine spektrale Darstellung 340 zeigt ein Spektrum des Empfangssignals 218 (Signal A) für den Fall, dass das Hochfrequenzfilter 214 Spiegelfrequenzbänder 336 (INB1) bzw. 338 (INB2) bedämpft. In anderen Worten, die Spiegelfrequenzbänder 336, 338 haben gemäß der spektralen Darstellung 340 eine kleinere Amplitude im Vergleich zu den Nutzfrequenzbändern 330, 332.

Eine spektrale Darstellung 360 zeigt ein Spektrum des Inphase-Signals 226 ($B_1$) bzw. des Quadratur-Signals 228 ($B_2$). An einer Abszisse 361a ist wiederum die Frequenz angetragen, während eine Ordinate 361b eine spektrale Leistungsdichte zeigt. Die Spektrale Darstellung 360 zeigt ein Abbild 362 des ersten Nutzfrequenzbands 330 und des ersten Spiegelfrequenzbands 336. In anderen Worten, das erste Nutzfrequenzband 330 und das zugehörige erste Spiegelfrequenzband 336 werden durch eine Mischung mit dem ersten Lokaloszillator 334 auf gleiche Frequenzbereiche abgebildet. Die spektrale Darstellung 360 zeigt ferner ein Abbild 364 des zweiten Nutzfrequenzbands 332 und des zugehörigen zweiten Spiegelfrequenzbands 338.

Die spektrale Darstellung 360 zeigt ferner das zweite Lokaloszillatorsignal 366. Das erste Abbild 362 und das zweite Abbild 364 sind bezüglich des zweiten Lokaloszillatorsignals 366 (zumindest teilweise) Spiegelbänder zueinander. In anderen Worten, das erste Abbild 362 und das zweite Abbild 364 liegen frequenzmäßig bezüglich der Frequenz des zweiten Lokaloszillatorsignals 366 (zumindest näherungsweise) spiegelbildlich.

Eine spektrale Darstellung 380 zeigt ein Spektrum des Ausgangssignals 242 an dem Ausgang des Pufferverstärkers 240 (auch mit C bezeichnet). Eine spektrale Darstellung 390 zeigt ein Spektrum des Ausgangssignals 272 an dem Ausgang des zweiten Pufferverstärkers 270 (auch mit D bezeichnet). Das Ausgangssignal 242 an dem Ausgang des ersten Pufferverstärkers 240 umfasst im Wesentlichen einen Informationsinhalt des ersten Nutzfrequenzbands 330 (sowie, in abgeschwächter Form, als ein parasitäres Signal, einen Signalanteil des ersten Spiegelfrequenzbands 336). Das Ausgangssignal 272 an dem Ausgang des zweiten Pufferverstärkers 270 umfasst im Wesentlichen einen Informationsinhalt des zweiten Nutzfrequenzbands 332 (und, abgeschwächt, als einen parasitären Anteil, einen Signalanteil des zweiten Spiegelfrequenzbandes 338).

Im Übrigen sei darauf hingewiesen, dass das Signal 242 an dem Ausgang des ersten Pufferverstärkers 240 sowie das Signal 272 an dem Ausgang des zweiten Pufferverstärkers 270 im Wesentlichen Signalanteile bei einer zweiten Zwischenfrequenz umfassen. In anderen Worten, das Abbild des ersten Nutzfrequenzbands 330 in dem Ausgangssignal 242 umfasst die zweite Zwischenfrequenz (ZF2) (bzw. liegt um die zweite Zwischenfrequenz herum). Das Abbild des zweiten Nutzfrequenzbands 332 in dem Ausgangssignal 272 umfasst ebenso die zweite Zwischenfrequenz (ZF$_2$) bzw. liegt um die zweite Zwischenfrequenz herum.

Im Übrigen sei darauf hingewiesen, dass das erste Nutzfrequenzband 330 gemäß Fig. 3 dem ersten Nutzfrequenzband 162 gemäß Fig. 1 entspricht. Im Übrigen entspricht das zweite Nutzfrequenzband 332 gemäß Fig. 3 dem zweiten Nutzfrequenzband 164 gemäß Fig. 1.

Zusammenfassend lässt sich somit festhalten, dass die vorgestellte Erfindung eine Empfängerarchitektur zur Reduzierung einer Leistungsaufnahme von hochgenauen breitbandigen Empfängern darstellt. Die Empfängerarchitektur gemäß den Fig. 1 und 2 kann beispielsweise für einen gleichzeitigen Empfang von zwei Bändern eines bestimmten Navigationssystems (z. B. L1 und L2c von GPS, oder L5 und L6 von GALILEO), aber auch für einen gleichzeitigen Empfang von Bändern aus verschiedenen Systemen Anwendung finden. Fig. 3 zeigt einen vereinfachten Frequenzvorgang innerhalb der modifizierten Weaver-Architektur bzw. innerhalb der modifizierten Weaver-Spiegelfrequenzunterdrückungsmischer. Fig. 2 zeigt eine Architektur des vorgestellten breitbandigen Doppel-Umsetzung-Niedere-Zwischenfrequenz-Dual-Empfängers. In anderen Worten, die Abbildung 2 zeigt eine Architektur eines erfindungsgemäßen Empfängers unter Verwendung eines erfindungsgemäßen Signalaufbereiters.

B1 und B2 stellen die gewünschten Bänder (bzw. Nutzfrequenzbänder) dar, und IMB1 und IMB2 stellen die entsprechenden Spiegelbänder dar. Eine Frequenz, bei der die Spiegelbänder liegen, hängt von einer Auswahl der Frequenz LO1 des ersten Lokaloszillatorsignals 304 ab. Zwei (beispielsweise) unabhängige Vorwahlfilter (implementiert beispielsweise in dem HF-Filter 214) selektieren das erste Nutzfrequenzband 330 (B1) und das zweite Nutzfrequenzband 332 (B2). Bei dem vorgestellten Frequenzvorgang bzw. bei der vorgestellten Auswahl von Frequenzen ist die Frequenz LO1 des ersten Lokaloszillatorsignals gemeinsam für das erste Nutzfrequenzband B1 und das zweite Nutzfrequenzband B2 ausgelegt, und liegt bevorzugt zwischen den beiden Nutzfrequenzbändern 330, 332. Eine genaue Frequenz LO1 eines ersten Lokaloszillatorsignals 304 ist dennoch nicht festgelegt. Die Frequenz LO1 des ersten Lokaloszillatorsignals soll auf der einen Seite so gewählt werden, dass die von den Vorwahlfiltern (realisiert beispielsweise durch das Hochfrequenzfilter 214) gewährleistete Unterdrückung (beispielsweise der Spiegelbänder 336, 338) maximiert ist. Auf der anderen Seite soll bei der Auswahl der Frequenz LO1 des ersten Lokaloszillatorsignals 304 (bzw. der Frequenz des ersten Lokaloszillators 306) die Stärke von Störern berücksichtigt werden. Ist beispielsweise der Frequenzgang von beiden Vorwahlfiltern (zur Unterdrückung der Spiegelbänder) zentriert auf der entsprechenden Mittenfrequenz gleich, so ist eine maximale Unterdrückung erreicht, wenn der erste Lokaloszillator LO1 (bzw. die Frequenz des ersten Lokaloszillators) bei drei Viertel von einem Band und ein Viertel von dem anderen liegt (vergleiche Fig. 3).

Es wird also bevorzugt, dass das Hochfrequenzfilter 240 eine Kombination aus zwei Bandpassfiltern bzw. ein kombiniertes Bandpassfilter umfasst, wobei das Bandpassfilter insgesamt einen ersten Durchlassbereich aufweist, in dessen Mitte das erste Nutzfrequenzband 330 liegt. Ferner wird es bevorzugt, dass das Bandpassfilter insgesamt einen zweiten Durchlassfrequenzbereich aufweist, in dessen Mitte der zweite Nutzfrequenzbereich 332 liegt. Ferner wird es bevorzugt, dass eine 10dB-Bandbreite (bevorzugt aber eine 20dB-Bandbreite oder eine 40dB-Bandbreite) des ersten Durchlassbereichs kleiner ist als ein Abstand zwischen Bandmitten des ersten Nutzfrequenzbands 330 und des zweiten Nutzfrequenzbands 332. Im Übrigen wird es ferner bevorzugt, das eine 10dB-Bandbreite (bevorzugt aber eine 20dB-Bandbreite oder eine 40dB-Bandbreite) des zweiten Durchlassbereichs kleiner als der Abstand zwischen der Bandmitte des ersten Nutzfrequenzbands 330 und des zweiten Nutzfrequenzbands 332 ist. In diesem Fall kann eine ausreichende Unterdrückung von Spiegelfrequenzen gewährleistet werden. Eine besonders gute Spiegelfrequenzunterdrückung ergibt sich, wenn die Frequenz des ersten Lokaloszillatorsignals 334 asymmetrisch zwischen dem ersten Nutzfrequenzband 330 und dem zweiten Nutzfrequenzband 332 liegt, so dass beispielsweise ein frequenzmäßiger Abstand zwischen einer Mittenfrequenz des ersten Nutzfrequenzbands 330 und dem Lokaloszillatorsignal 334 dreimal so groß ist wie ein frequenzmäßiger Abstand zwischen der Mittenfrequenz des zweiten Nutzfrequenzbands 332 und dem Lokaloszillatorsignal 334.

Der Empfänger 200 kann beispielsweise aus einem einzigen Pfad mit einer dualen Antenne 212, einem Vorwahlfilter 214 und einem rauscharmen Verstärker 216 (LNA) bestehen. Alternativ kann der Empfänger auch aus zwei Pfaden mit normalen (z. B. einbandigen) und für das entsprechende Band angepassten Antennen, Filtern und Verstärkern bestehen. Nach der ersten komplexen Frequenzumsetzung (durch den ersten Mischer) werden B1 bei ZF$_{1B1}$ und B2 bei ZF$_{1B2}$ mit dem zweiten Lokaloszillatorsignal LO$_2$ zu einer gemeinsamen zweiten Zwischenfrequenz ZF$_2$ heruntergemischt. Dafür liegt die Frequenz des zweiten Lokaloszillatorsignals LO$_2$ bevorzugt in der Mitte zwischen ZF$_{1B1}$ und ZF$_{1B2}$, so dass B1 und B2 ein zweites Spiegelband voneinander sind. Die zweite Frequenzumsetzung wird durch einen doppelten komplexen Mischer (beispielsweise durch den zweiten Mischer 230) durchgeführt. Die vier realen Signale (also die vier Ausgangssignale der ersten Mischeranordnung 290, der zweiten Mischeranordnung 292, der dritten Mischeranordnung 294 und der vierten Mischeranordnung 296) werden zu zweit addiert (in den Kombinierern bzw. Addierern bzw. Summierern 298, 300), wodurch B1 und B2 voneinander getrennt vorliegen. Das zweite Lokaloszillatorsignal $LO_2$ kann aus dem ersten Lokaloszillatorsignal LO1 beispielsweise durch einen einfachen digitalen Frequenzteiler erzeugt werden. Auf diese Weise kann die beschriebene Doppel-Frequenzumsetzung von zwei verschiedenen Bändern durch einen einzigen Frequenzsynthesizer durchgeführt werden.

Die realen B1 und B2 liegen bei einer niedrigen zweiten $ZF_2$, die nahe über der Hälfte der größten Bandbreite zwischen B1 und B2 liegt. Dadurch wird die Leistungsaufnahme der Verstärker 246, 276 mit einstellbarer Verstärkung und der Analog/Digital-Umsetzer 248, 278 maximal optimiert.

Die oben beschriebene Empfängertopologie unterdrückt die beiden Spiegelsignale von einer Doppel-Frequenzumsetzung durch eine modifizierte Weaver-Topologie, eine innovative Frequenzplanung (die beide Bänder als Spiegel bzw. Spiegelbänder voneinander bei der zweiten Frequenzumsetzung betrachtet) und einen einzigen Frequenzsynthesizer. Die Empfängertopologie ist daher selbst sehr leistungsoptimiert, und hilft somit, die Stromaufnahme der Verstärker 246, 276 mit einstellbarer Verstärkung und der Analog/Digital-Umsetzer 248, 278 zu minimieren.

Der Analog/Digital-Umsetzer 248, 278 macht in der beschriebenen Architektur keine Frequenzumsetzung durch Unterabtastung, da die zweite Zwischenfrequenz $ZF_2$ schon so klein ist, wie sie bezüglich der größten Bandbreite von B1 und B2 sein kann.

Abschließend werden B1 und B2 durch eine einfache Quadraturabtastung bei $f_s/2$ in ein Basisband heruntergemischt, wobei $f_s$ die Abtastrate des Analog/Digital-Umsetzers 248, 278 darstellt. Dafür ist die Abtastrate $f_s$ vier mal höher als die zweite Zwischenfrequenz $ZF_2$, was bei der vorgestellten Architektur nicht anspruchsvoll ist, dank der minimalen zweiten Zwischenfrequenz $ZF_2$. Bei einem Verhältnis zwischen der zweiten Zwischenfrequenz $ZF_2$ und der Abtastrate gemäß $ZF_2 = f_s/4$ ergibt die Quadraturabtastung B1 und B2 in dem Basisband als komplexe Signale ohne analoge Ungenauigkeiten und bei einer Datenrate von $f_s/2$ für jeden Kanal.

Eine analoge Doppel-Frequenzumsetzung ermöglicht eine minimale zweite Zwischenfrequenz $ZF_2$. Dies ermöglicht wiederum, dass keine Unterabtastung benötigt wird. Dadurch kann eine Anti-Aliasing-Funktion der Filterung vor dem Verstärker 246, 276 mit einstellbarer Verstärkung (VGA) durch einen Tiefpass 244, 274 realisiert werden. Dies ist ein großer Vorteil für Anwendungen, die sehr empfindlich bezüglich Gruppenlaufzeitänderung sind. Dies ist bei großen Bandbreiten besonders kritisch.

Im folgenden werden die Verbesserungen und Vorteile gegenüber dem Stand der Technik beschrieben, die sich durch den erfindungsgemäßen Signalaufbereiter bzw. durch die erfindungsgemäße Empfängertopologie ergeben. Die hier vorgestellte Empfängertopologie ist ein Dual-Band-Empfänger und benötigt weniger Bauteile als bei zwei unabhängigen Empfängern. Im Gegensatz zu anderen Dual-Empfängern unterdrückt die hier vorgestellte Topologie beide Spiegelfrequenzen, die aus einer zweistufigen Frequenzumsetzung stammen. Ein großer Vorteil besteht darin, dass sich die Stromaufnahme bei der Unterdrückung von breiteren Spiegelsignalen nicht erhöht. Dies ist z. B. nicht der Fall, wenn man eine Hartley-Topologie verwenden würde, die auf komplexen aktiven Bandpässen basiert.

Die erfindungsgemäße Topologie ist hochintegrierbar, und ermöglicht die Implementierung in Form einer Einchip-Lösung. Beispielsweise können der erste Mischer 220 und der zweite Mischer 230 monolithisch in Silizium-Halbleitertechnologie auf einem Chip integriert werden. Ferner können optional die Puffer 240, 270, die Tiefpassfilter 244, 274, die Verstärker 246, 276, die Analog/Digital-Umsetzer 248, 278 und/oder die Nachverarbeitung 260 auf dem gleichen Chip monolithisch integriert werden. Optional können ferner zusätzlich beispielsweise der Verstärker 216 und/oder die Erzeugung der Lokaloszillatorsignale (bestehend aus Lokaloszillator 306, Frequenzteiler 312 sowie den Phasenschiebern 302, 310) monolithisch auf einem Chip integriert werden. Im Übringen können beispielsweise die Mischer 220, 230 mit Dioden oder mit Transistoren aktiv oder passiv ausgeführt werden. Beispielsweise kann eine CMOS-Technologie oder eine Gallium-Arsenid-Technologie eingesetzt werden.

Im Übrigen ermöglicht die beschriebene Topologie eine sehr Leistungsoptimierte Implementierung. Dies ist der Fall, da nur ein einziger Frequenzsynthesizer benötigt wird und da die zweite Zwischenfrequenz $ZF_2$ minimal sein kann. Ferner benötigt die Unterdrückung des zweiten Spiegelsignals nicht für jedes Band einen Inphase-Pfad (I) und einen Quadratur-Pfad (Q), was die Anzahl von Filtern und Verstärkern mit einstellbarer Verstärkung (VGAs) verdoppeln würde. Dies wäre der Fall, wenn man die alternative Hartley-Topologie für die Unterdrückung des zweiten Spiegelbandes verwenden würde.

Es sei darauf hingewiesen, dass es Empfängertopologien gibt, die beide Spiegelsignale unterdrücken, aber viel Strom brauchen und stark bandlimitiert sind. Es sei ferner darauf hingewiesen, dass es andere Empfänger gibt, die weniger Leistung brauchen, aber nur eines von beiden Spiegelbändern unterdrücken. Die erfindungsgemäße Topologie kombiniert die Stärken beider herkömmlicher Topologien in einer hochintegrierten bzw. hochintegrierbaren Lösung, wobei die Spiegelbandunterdrückung unabhängig von einer Signalbandbreite ist. Beide Spiegelsignale werden innerhalb einer Weaver-Topologie, dank einer innovativen Frequenzplanung, unterdrückt. Andere hochintegrierte bzw. hochintegrierbare Topologien benötigen eine Weaver-Architektur, um die Trennung der gewünschten Bänder durchzuführen (erstes Spiegelsignal), und nach der Trennung eine Hartley-Topologie, um das zweite Spiegelsignal aus beiden Bändern auszublenden. Dafür sind beide Signale in komplexer Form notwendig, was vier Filter und VGAs erfordert. Dank der erfindungsgemäßen Trennung der beiden Bänder bei der zweiten und nicht bei der ersten Frequenzumsetzung genügt es bei der beschriebenen Topologie, mit realen und nicht komplexen Pfaden für die getrennten Bänder zu arbeiten. Eine andere Möglichkeit besteht darin, das zweite Spiegelband in einem digitalen Bereich zu unterdrücken. Dies ist bei einem Dual-Empfänger nicht oder nur unter großen Schwierigkeiten möglich, weil dies die Mischung von schon getrennten Bändern erfordern würde.

Es sei darauf hingewiesen, dass eine neue und effiziente Topologie, um einen Doppelbandempfänger zu implementieren, auf einer gemeinsamen ersten Zwischenfrequenz (ZF) basiert. Einerseits verursacht diese Auswahl, dass beide Bänder Spiegelband voneinander sind. Andererseits liefert die HF-Band-Selektion keine Spiegelbandunterdrückung, weil beide empfangenen Bänder nach der entsprechenden Filterung und rauscharmen Verstärkung miteinander addiert werden. Diese beiden Faktoren ergeben den Bedarf nach einer Empfängerarchitektur, die Spiegelbandunterdrückung leistet. Die Unterdrückung kann allerdings gering gehalten werden, weil als Spread-Spektrum das Spiegelband nur als thermisches Rauschen betrachtet werden kann. Dies erleichtert die Integrierbarkeit der Architektur. Um die Bandbreite eines Verstärkers mit einstellbarer Verstärkung (VGA) und eine Taktfrequenz eines Analog/Digital-Wandlers (ADU) zu optimieren, ist es erwünscht, die Bänder bei einer Zwischenfrequenz (ZF), die ungefähr der Hälfte der Bandbreite (der Nutzfrequenzbänder) entspricht, zu setzen. Die erste Zwischenfrequenz (ZF) ist durch den Frequenzabstand zwischen beiden Bändern festgelegt, egal wie breit die Bänder sind. Die erste Zwischenfrequenz (ZF) ist in der Regel deutlich größer als die Hälfte der Bandbreiten der Nutzfrequenzbänder. Eine zusätzliche Frequenzumsetzung ist daher nötig, um die zweite Zwischenfrequenz (ZF) zu erreichen. Dabei ergibt sich der Nachteil, dass man auch das wiederum entstehende Spiegelband unterdrücken muss. Die Unterdrückung kann beispielsweise durch einen komplexen aktiven Bandpassfilter realisiert werden. Die beschriebene Lösung ist allerdings bezüglich der Bandbreite limitiert; weil die Stromaufnahme einer derartigen komplexen Filterung mit der Frequenz stark ansteigt. Aus diesem Grund kommen nur kleine bis mittlere Bandbreiten (ca. 2 - 5 MHz) für mobile

In anderen Worten, die erfindungsgemäße Empfängerarchitektur basiert auf der oben beschriebenen Architektur und stellt eine Weiterbildung der oben beschriebenen Architektur dar.

Im Folgenden wird noch einmal die mit der vorliegenden Erfindung gelöste Aufgabe kurz skizziert. Mit der hier vorgestellten Erfindung können zukünftige sehr breitbandige mobile Empfänger für hochgenaue Ortsbestimmungssystem aufgebaut werden, die hochintegrierbar sind, und die wenig Leistung verbrauchen. Um eine Dualband-Architektur und den Empfang von sehr großen Bändern zu vereinigen, werden zwei Spiegelfrequenzen breitbandig unterdrückt. Der vorgestellte Empfänger bzw. die vorgestellte Empfängerarchitektur platziert einen einzigen ersten Oszillator (LO1) unsymmetrisch zwischen beiden Bändern, was zwei verschiedene Zwischenfrequenzen und entsprechend zwei Spiegelsignale ergibt. Die Unterdrückung der zwei Spiegelbänder erfolgt durch eine Selektivität von Vorwahlfiltern. Eine genaue Wahl für die Frequenz des ersten Lokaloszillators bzw. des ersten Oszillators LO1 erfolgt beispielsweise, um eine maximale Dämpfung der ersten Spiegelbänder zu erzielen. Der zweite Oszillator bzw. die Frequenz des zweiten Lokaloszillators liegt in der Mitte der beiden Zwischenfrequenzen $ZF_{1B1}$ und $ZF_{1B2}$. Dadurch sind die beiden gewünschten Bänder zweite Spiegelbänder voneinander und können durch einen modifizierten Weaver-Spiegelfrequenz-Unterdrückungs-Mischer voneinander getrennt werden. Bei der beschriebenen Topologie liegen beide Bänder bei einer geringen gemeinsamen zweiten Zwischenfrequenz ($ZF_2$), wodurch die Leistungsaufnahme des Verstärkers mit einstellbarer Verstärkung (VGA) und des Analog/Digital-Umsetzers (ADU) erheblich reduziert wird.

Die beschriebene Dual-Topologie mit Doppel-Umsetzung ermöglicht somit, einen billigen Einchipempfänger in CMOS-Technologie zu integrieren.

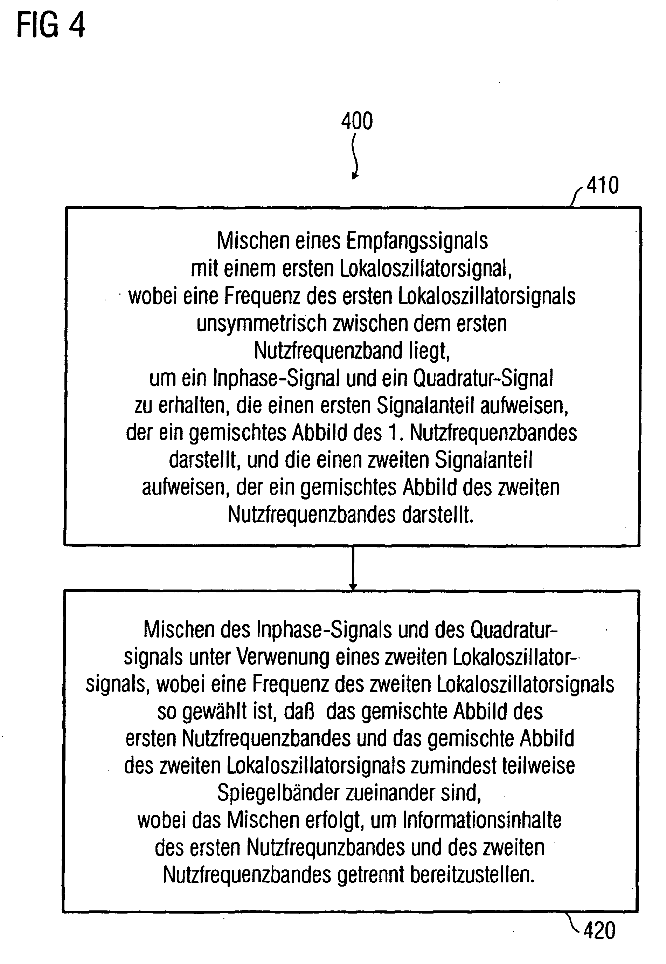

Fig. 4 zeigt im Übrigen ein erfindungsgemäßes Verfahren zum Verarbeiten eines Empfangssignals mit einem ersten Nutzfrequenzband und einem zweiten Nutzfrequenzband. Das Verfahren gemäß der Fig. 4 ist in seiner Gesamtheit mit 400 bezeichnet. Das Verfahren 400 umfasst in einem ersten Schritt 410 ein Mischen eines Empfangssignals, das das erste Nutzfrequenzband und das zweite Nutzfrequenzband enthält, mit einem ersten Lokaloszillatorsignal, wobei eine Frequenz des ersten Lokaloszillatorsignals unsymmetrisch zwischen dem ersten Nutzfrequenzband und dem zweiten Nutzfrequenzband liegt, um ein Inphase-Signal und ein Quadratur-Signal zu erhalten, die einen ersten Signalanteil aufweisen, der ein gemischtes Abbild des ersten Nutzfrequenzbands darstellt, und die einen zweiten Signalanteil aufweisen, der ein gemischtes Abbild des zweiten Nutzfrequenzbandes darstellt.

Das Verfahren 400 umfasst ferner in einem zweiten Schritt 420 ein Mischen des Inphase-Signals und des Quadratur-Signals unter Verwendung eines zweiten Lokaloszillatorsignals. Eine Frequenz des zweiten Lokaloszillatorsignals ist so gewählt, dass das gemischte Abbild des ersten Nutzfrequenzbands und das gemischte Abbild des zweiten Nutzfrequenzbands bezüglich des zweiten Lokaloszillatorsignals zumindest teilweise Spiegelbänder zueinander sind. Das Mischen erfolgt ferner, um Informationsinhalte des ersten Nutzfrequenzbands und des zweiten Nutzfrequenzbands getrennt bereitzustellen.

Das Verfahren 400 kann im übrigen um alle diejenigen Schritte ergänzt werden, die durch die beschriebenen Signalaufbereiter ausgeführt werden.

Zusammenfassend lässt sich somit festhalten, dass die vorliegende Erfindung einen breitbandigen Doppel-Umsetzung-Niedrige-Zwischenfrequenz-Dual-Empfänger schafft. Der vorgestellte Doppel-Umsetzungs-Empfänger unterdrückt beide Spiegelfrequenzen unabhängig von der Bandbreite der zwei empfangenen Bänder. Die Unterdrückung des ersten Spiegelsignals wird durch die Dämpfung des Vorauswahlfilters und durch eine intelligente Frequenzplanung für die erste Frequenzumsetzung durchgeführt. Der zweite Lokaloszillator liegt zwischen beiden gewünschten Bändern, so dass die gewünschten Bänder nach der ersten Frequenzumsetzung Spiegelband voneinander sind. Die Trennung von beiden Bändern wird durch eine modifizierte zweite Stufe eines Weaver-Mischers zur Spiegelfrequenzunterdrückung durchgeführt. Die Vorteile dieser Architektur liegen in der Möglichkeit, einen hochgenauen, breitbandigen und Leistungs-optimierten Empfänger zu implementieren. Ferner ist die erfindungsgemäße Empfängerarchitektur vollständig (monolithisch) integrierbar.

Die vorliegende Erfindung ermöglicht somit beispielsweise den Aufbau von hochgenauen Dual-Empfängern für Ortsbestimmungssysteme. Die vorliegende Erfindung kann beispielsweise in einem GPS-Dual-Empfänger, in einem GALILEO-Dual-Empfänger, in einem GLONASS-Dual-Empfänger oder in einem GNSS-Dual-Empfänger eingesetzt werden. Die innovative Frequenzplanung ermöglicht eine Unterdrückung von beiden Spiegelbändern mit nur einer einzigen Spiegelbandunterdrückung, wodurch viel Leistung eingespart wird. Somit entsteht eine hochintegrierbare Dual-Empfänger-Topologie, die bezüglich der Spiegelbandunterdrückung nicht durch die Signalbandbreite begrenzt ist.

**Patentansprüche**

1.  Signalaufbereiter (100; 200) zum Verarbeiten eines Empfangssignals (112; 218) mit einem ersten Nutzfrequenzband (162; 330) und einem zweiten Nutzfrequenzband (164; 332), um zwei Ausgangssignale (140, 142; 236, 238) zu erhalten, mit folgenden Merkmalen:

    einem ersten Mischer (110; 220) zum Mischen des Empfangssignals mit einem ersten Lokaloszillatorsignal (114; 304), wobei eine Frequenz des ersten Lokaloszillatorsignals unsymmetrisch zwischen dem ersten Nutzfrequenzband und dem zweiten Nutzfrequenzband liegt, und wobei der erste Mischer ausgelegt ist, um ein Inphase-Signal (120; 226) und ein Quadratur-Signal (122; 228) zu erhalten, die einen ersten Signalanteil (172, 182; 362) aufweisen, der ein gemischtes Abbild des ersten Nutzfrequenzbands darstellt, und die einen zweiten Signalanteil (174, 184; 364) aufweisen, der ein gemischtes Abbild des zweiten Nutzfrequenzbands darstellt; und einem zweiten Mischer (130) zum Mischen des Inphase-Signals und des Quadratursignals unter Verwendung eines zweiten Lokaloszillatorsignals (132; 232, 234, 308), wobei eine Frequenz $f_{LO2}$ des zweiten Lokaloszillatorsignals so gewählt ist, dass das durch den ersten Mischer erzeugte gemischte Abbild (172, 182; 362) des ersten Nutzfrequenzbands und das durch den ersten Mischer erzeugt gemischte Abbild (174, 184; 364) des zweiten Nutzfrequenzbands bezüglich des zweiten Lokaloszillatorsignals zumindest teilweise Spiegelbänder zueinander sind,

    wobei der zweite Mischer ausgelegt ist, um an seinem Ausgang (140, 142; 236, 238) Informationsinhalte des ersten Nutzfrequenzbandes und des zweiten Nutzfrequenzbandes getrennt bereitzustellen, um ein erstes Ausgangssignal (140; 236) zu erhalten, das im Wesentlichen einen Informationsinhalt des ersten Nutzfrequenzbands umfasst, und um ein zweites Ausgangssignal (142; 238) zu erhalten, das im Wesentlichen einen Informationsinhalt des zweiten Nutzfrequenzbands umfasst.

2.  Signalaufbereiter (100; 200) gemäß Anspruch 1, wobei der Signalaufbereiter ferner ein Bandpassfilter (214) umfasst, das ausgelegt ist, um das Empfangssignal (112; 218) basierend auf zumindest einem Eingangssignal (210) bereitzustellen, und das ferner ausgelegt ist, um das erste Nutzfrequenzband (162; 330) und das zweite Nutzfrequenzband (164; 332) passieren zu lassen, und um an das erste Nutzfrequenzband und an das zweite Nutzfrequenzband angrenzende Frequenzbänder stärker zu bedämpfen als die Nutzfrequenzbänder.

3.  Signalaufbereiter (100; 200) gemäß Anspruch 2, bei dem das Bandpassfilter (214) ausgelegt ist, um das erste Nutzfrequenzband (162; 330) ungedämpft oder mit einer geringen Dämpfung passieren zu lassen, und um ein zu dem ersten Nutzfrequenzband im Hinblick auf eine Frequenz ($f_{LO1}$) des ersten Lokaloszillatorsignals (114; 222, 224, 304; 334) gehöriges Spiegelfrequenzband (336) stärker zu bedämpfen als das erste Nutzfrequenzband, und bei dem das Bandpassfilter ausgelegt ist, um das zweite Nutzfrequenzband (164; 332) ungedämpft oder mit einer geringen Dämpfung passieren zu lassen, und ein zu dem zweiten Nutzfrequenzband im Hinblick auf die Frequenz des ersten Lokaloszillatorsignals gehöriges Spiegelfrequenzband (338) stärker zu bedämpfen als das zweite Nutzfrequenzband.

4.  Signalaufbereiter (100; 200) gemäß einem der Ansprüche 1 bis 3, bei dem die Frequenz ($f_{LO1}$) des ersten Lokaloszillatorsignals (114; 222, 224, 304; 334) so gewählt ist, dass das erste Nutzfrequenzband (162; 330) und das zweite Nutzfrequenzband (164; 332) durch den ersten Mischer (110; 220) auf nicht-überlappende oder voneinander beabstandete Frequenzbänder (172, 174, 182, 184; 362, 364) abgebildet werden.

**5.** Signalaufbereiter (100; 200) gemäß einem der Ansprüche 1 bis 4, wobei zwischen einer Frequenz $f_1$, die eine Bandmitte des ersten Nutzfrequenzbands (162; 330) beschreibt, und einer Frequenz $f_2$, die eine Bandmitte des zweiten Nutzfrequenzbands (164; 332) beschreibt, und der Frequenz $f_{LO1}$ des ersten Lokaloszillatorsignals (114; 222, 224, 304; 334) eine der folgenden Beziehungen gilt:

$$f_2 + 0{,}15 \, (f_1 - f_2) \leq f_{LO1} \leq f_2 + 0{,}35 \, (f_1 - f_2)$$

oder

$$f_2 + 0{,}65 \, (f_1 - f_2) \leq f_{LO1} \leq f_2 + 0{,}85 \, (f_1 - f_2),$$

wobei die Frequenz $f_2$ kleiner als die Frequenz $f_1$ ist.

**6.** Signalaufbereiter (100; 200) gemäß Anspruch 5, wobei die Frequenz $f_{LO1}$ außerhalb des ersten Nutzfrequenzbandes (162; 330) und außerhalb des zweiten Nutzfrequenzbandes (164; 332) liegt.

**7.** Signalaufbereiter (100; 200) gemäß einem der Ansprüche 1 bis 6, wobei eine Frequenz $f_3$ eine untere Bandgrenze des zweiten Nutzfrequenzbandes (164; 332) beschreibt,
wobei eine Frequenz $f_4$ eine obere Bandgrenze des zweiten Nutzfrequenzbands beschreibt, wobei eine Frequenz $f_5$ eine untere Bandgrenze des ersten Nutzfrequenzbands (162; 330) beschreibt, wobei für eine Frequenz $f_{LO1}$ des ersten Lokaloszillatorsignals (114; 222, 224, 304; 334) die beiden folgenden Bedingungen erfüllt sind:

$$f_4 \leq f_{LO1} \leq f_5,$$

und

$$f_{LO1} \leq (f_3 + f_5)/2;$$

und
wobei ferner gilt:

$$f_3 \leq f_4 \leq f_5$$

**8.** Signalaufbereiter (100; 200) gemäß einem der Ansprüche 1 bis 6, wobei eine Frequenz $f_4$ eine obere Bandgrenze des zweiten Nutzfrequenzbandes (164; 332) beschreibt, wobei eine Frequenz $f_5$ eine untere Bandgrenze des ersten Nutzfrequenzbands (162; 330) beschreibt, wobei eine Frequenz $f_6$ eine obere Bandgrenze des ersten Nutzfrequenzbands (162; 330) beschreibt, wobei für eine Frequenz $f_{LO1}$ des ersten Lokaloszillatorsignals (114; 222, 224, 304; 334) die beiden folgenden Bedingungen erfüllt sind:

$$f_4 \leq f_{LO1} \leq f_5,$$

und

$$f_{LO1} \geq (f_4 + f_6)/2;$$

und
wobei ferner gilt:

$$f_4 \leq f_5 \leq f_6.$$

9. Signalaufbereiter (100; 200) gemäß einem der Ansprüche 1 bis 8, wobei das erste Nutzfrequenzband (162; 330) ein L1-Band eines GPS-Positionsbestimmungssystems ist, und wobei das zweite Nutzfrequenzband (164; 332) ein L2-Band des GPS-Positionsbestimmungssystems ist; oder
wobei das erste Nutzfrequenzband bei erstes Band eines GALILEO-Positionsbestimmungssystems ist, und wobei das zweite Nutzfrequenzband ein zweites Band des GALILEO-Positionsbestimmungssystems ist.

10. Signalaufbereiter (100; 200) gemäß einem der Ansprüche 1 bis 9, bei dem die Frequenz ($f_{LO2}$) des zweiten Lokaloszillatorsignals (132; 232, 234, 308) so gewählt ist, dass die Frequenz des zweiten Lokaloszillatorsignals zwischen einem Abbild (172, 182; 362) des ersten Nutzfrequenzbandes (162; 330), auf das der erste Mischer (110; 220) das erste Nutzfrequenzband durch ein Heruntermischen abbildet, und einem Abbild (174, 184; 364) des zweiten Nutzfrequenzbandes (164; 332), auf das der erste Mischer das zweite Nutzfrequenzband durch ein Heruntermischen abbildet, liegt.

11. Signalaufbereiter (100; 200) gemäß einem der Ansprüche 1 bis 10, bei dem die Frequenz ($f_{LO2}$) des zweiten Lokaloszillatorsignals (132; 232, 234, 304) so gewählt ist, dass sich die Frequenz des zweiten Lokaloszillatorsignals von einem Mittelwert zwischen einer Mittenfrequenz des ersten Signalanteils (172, 182; 362) und einer Mittenfrequenz des zweiten Signalanteils (174, 184; 364) um höchstens 20 % unterscheidet.

12. Signalaufbereiter (100; 200) gemäß einem der Ansprüche 1 bis 11. bei dem der erste Mischer (110; 220) einen Inphase-Mischer (282) und einen Quadratur-Mischer (284) umfasst,
wobei der Inphase-Mischer ausgelegt ist, um das Empfangssignal (112; 218) zu empfangen und unter Durchführung einer Frequenzumsetzung auf das Inphase-Signal (120; 226) abzubilden,
wobei der Quadratur-Mischer (284) ausgelegt ist, um das Empfangssignal (112; 218) zu empfangen und unter Durchführung einer Frequerizabsetzung auf das Quadratursignal (122; 228) abzubilden, und
wobei der Inphase-Mischer und der Quadratur-Mischer ausgelegt sind, um zueinander phasenverschobene Lokaloszillatorsignale (222, 224) gleicher Frequenz zu empfangen, die beide auf dem ersten Lokaloszillatorsignal (114; 304) basieren,
wobei eine Phasenverschiebungen zwischen den von dem Inphase-Mischer und von dem Quadratur-Mischer empfangenen Lokaloszillatorsignalen in einem Bereich zwischen 70 Grad und 110 Grad liegt.

13. Signalaufbereiter (100; 200) gemäß einem der Ansprüche 1 bis 12, bei dem der zweite Mischer (130; 230) eine erste Mischeranordnung (290), eine zweite Mischeranordnung (292), eine dritte Mischeranordnung (294), eine vierte Mischeranordnung (296), einen ersten Kombinierer (298) und einen zweiten Kombinierer (300) umfasst,
wobei die erste Mischeranordnung (290) ausgelegt ist, um das Inphase-Signal (120; 226) und ein der ersten Mischeranordnung zugeordnetes Lokaloszillatorsignal (232) zu empfangen, und um ein der ersten Mischeranordnung (290) zugeordnetes Ausgangssignal zu erzeugen;
wobei die zweite Mischeranordnung (292) ausgelegt ist, um das Inphase-Signal (120; 226) und ein der zweiten Mischeranordnung (292) zugeordnetes Lokaloszillatorsignal (234) zu empfangen, und um ein der zweiten Mischeranordnung (292) zugeordnetes Ausgangssignal zu erzeugen;
wobei die dritte Mischeranordnung (294) ausgelegt ist, um das Quadratur-Signal (122; 228) und ein der dritten Mischeranordnung (294) zugeordnetes Lokaloszillatorsignal (232) zu empfangen, und um ein der dritten Mischeranordnung zugeordnetes Ausgangssignal zu erzeugen;
wobei die vierte Mischeranordnung (296) ausgelegt ist, um das Quadratur-Signal (122; 228) und ein der vierten Mischeranordnung (296) zugeordnetes Lokaloszillatorsignal (234) zu empfangen, und um ein der vierten Mischeranordnung zugeordnetes Ausgangssignal zu erzeugen;
wobei der erste Kombinierer (298) ausgelegt ist, um das Ausgangssignal der zweiten Mischeranordnung (292) mit dem Ausgangssignal der dritten Mischeranordnung (294) zu kombinieren, um das erste Ausgangssignal (140; 236) zu erhalten;

wobei der zweite Kombinierer (300) ausgelegt ist, um das Ausgangssignal der ersten Mischeranordnung (290) mit dem Ausgangssignal der vierten Mischeranordnung (296) zu kombinieren, um das zweite Ausgangssignal (142; 238) zu erhalten;

wobei die Lokaloszillatorsignale der ersten Mischeranordnung und der dritten Mischeranordnung sich bezüglicher ihrer Phasenlage um höchstens 20 Grad unterscheiden;

wobei die Lokaloszillatorsignale der zweiten Mischeranordnung und der vierten Mischeranordnung sich bezüglicher ihrer Phasenlage um höchstens 20 Grad unterscheiden; und

wobei die Lokaloszillatorsignale der ersten Mischeranordnung und der dritten Mischeranordnung gegenüber den Lokaloszillatorsignalen der zweiten Mischeranordnung und der vierten Mischeranordnung eine Phasenverschiebungen in einem Bereich zwischen 70 Grad und 110 Grad aufweisen.

14. Signalaufbereiter (100; 200) gemäß Anspruch 13, wobei das Lokaloszillatorsignal (232) der ersten Mischeranordnung (290) gleich dem Lokaloszillatorsignal der dritten Mischeranordnung (294) ist; und

wobei das Lokaloszillatorsignal der zweiten Mischeranordnung (292) gleich dem Lokaloszillatorsignal der vierten Mischeranordnung (296) ist.

15. Signalaufbereiter (100; 200) gemäß Anspruch 13 oder 14, bei dem der erste Kombinierer (298) ein erster Summierer ist, der ausgelegt ist, um die Ausgangssignale der zweiten Mischeranordnung (292) und der dritten Mischeranordnung (294) mit gleichem Vorzeichen zu summieren, um das erste Ausgangssignal (140; 236) zu erhalten; und

bei dem der zweite Kombinierer (300) ein zweiter Summierer ist, der ausgelegt ist, um die Ausgangssignale der ersten Mischeranordnung (290) und der vierten Mischeranordnung (296) mit gleichem Vorzeichen zu summieren, um das zweite Ausgangssignal (142; 238) zu erhalten.

16. Signalaufbereiter (100; 200) gemäß einem der Ansprüche 1 bis 15, wobei der Signalaufbereiter ausgelegt ist, um das zweite Lokaloszillatorsignal (132; 232, 234, 308) durch einen Frequenzteiler (312) aus dem ersten Lokaloszillatorsignal (304) zu erzeugen, oder um das erste Lokaloszillatorsignal (114; 222, 224, 304) und das zweite Lokaloszillatorsignal (132; 232, 234, 308) durch einen Frequenzsynthesizer von einem gemeinsamen Signal abzuleiten, so dass das erste Lokaloszillatorsignal und das zweite Lokaloszillatorsignal in einem vorgegebenen festen Frequenzverhältnis zueinander stehen.

17. Signalaufbereiter (100; 200) gemäß einem der Ansprüche 1 bis 16, bei dem der erste Mischer (110; 220) und der zweite Mischer (130; 230) ausgelegt sind, um analoge wertkontinuierliche und zeitkontinuierliche Eingangssignale (112, 120, 122; 218, 226, 228) und Lokaloszillatorsignale (114, 132; 222, 224, 304, 232, 234, 310) zu verarbeiten, und um Ausgangssignale (120, 122, 140, 142; 226, 228, 236, 238) in einer wertkontinuierlichen und zeitkontinuierlichen Darstellung auszugeben.

18. Signalaufbereiter (100; 200) gemäß einem der Ansprüche 1 bis 17, wobei der Signalaufbereiter ausgelegt ist, um das erste Ausgangssignal (140; 236) oder ein davon abgeleitetes Signal mit einer Abtastfrequenz ($f_s$) abzutasten und analog-zu-digital zu wandeln, um ein erstes digitalisiertes Signal (250) zu erhalten, und um das zweite Ausgangssignal (142; 238) oder ein davon abgeleitetes Signal mit der Abtastfrequenz abzutasten und analog-zu-digital zu wandeln, um ein zweites digitalisiertes Signal (280) zu erhalten, wobei die Abtastfrequenz von einem Vierfachen einer zweiten Zwischenfrequenz, auf die der zweite Mischer (130; 230) das Abbild (172, 182; 362) des ersten Nutzfrequenzbands (162; 330) und das Abbild (174, 184; 364) des zweiten Nutzfrequenzbandes (164; 332) abbildet, um höchstens 20 % abweicht.

19. Signalaufbereiter (100; 200) gemäß Anspruch 18, wobei die zweite Zwischenfrequenz definiert ist als eine Mittenfrequenz eines durch eine Abwärtsmischung des Abbildes (172, 182; 362) des ersten Nutzfrequenzbandes (162; 330) durch den zweiten Mischer erzeugten Signalanteils in dem ersten Ausgangssignal (140; 236), oder als eine Mittenfrequenz eines durch eine Abwärtsmischung des Abbildes (174, 184; 364) des zweiten Nutzfrequenzbandes (164; 132) durch den zweiten Mischer erzeugten Signalanteils in dem zweiten Ausgangssignal (142; 238).

20. Signalaufbereiter (100; 200) gemäß Anspruch 18 oder 19, wobei der Signalaufbereiter ausgelegt ist, um das erste digitalisierte Signal (250) in ein Basisband herunterzumischen, und um das zweite digitalisierte Signal (280) in ein Basisband herunterzumischen.

21. Signalaufbereiter (100; 200) gemäß einem der Ansprüche 18 bis 20, wobei der Signalaufbereiter ausgelegt ist, um das erste digitalisierte Ausgangssignal (250) einer Quadraturabtastung zu unterwerfen, indem aus dem ersten digitalisierten Ausgangssignal jeder zweite Abtastwert zu Null gesetzt oder entfernt wird, und indem übrige Abtastwerte abwechselnd mit einem ersten vorgegebene Wert (+1) und einem zweiten vorgegebenen Wert (-1) gewichtet werden, um ein erstes Inphase-Ausgangssignal (282) zu erhalten, wobei der erste vorgegebene Wert (+1) und der zweite vorgegebene Wert (-1) invers zueinander sind, und indem aus dem ersten digitalisierten Ausgangssignal (280) zeitlich um einen Abtastschritt versetzt zu der Berechnung des ersten Inphase-Ausgangssignals (284) jeder zweite Abtastwert zu Null gesetzt oder entfernt wird, und indem übrige Abtastwerte abwechselnd mit einem dritten vorgegebenen Wert (+1) und einem vierten vorgegebenen Wert (-1) gewichtet werden, um ein erstes Quadratur-Ausgangssignal zu erhalten, wobei der dritte vorgegebene Wert (+1) und der vierte vorgegebene Wert (-1) invers zueinander sind.

22. Signalaufbereiter (100; 200) gemäß einem der Ansprüche 1 bis 21, wobei der erste Mischer (110; 220) und der zweite Mischer (130; 230) in einer CMOS-Technologie realisiert sind.

23. Signalaufbereiter (100; 200) gemäß einem der Ansprüche 1 bis 22, wobei der erste Mischer (110; 220) und der zweite Mischer (130; 230) monolithisch auf einem Chip integriert sind.

24. Verfahren (400) zum Verarbeiten eines Empfangssignals (112; 218) mit einem ersten Nutzfrequenzband (162; 330) und einem zweiten Nutzfrequenzband (164; 232), mit folgenden Schritten:

Mischen des Empfangssignals mit einem ersten Lokaloszillatorsignal (114; 222, 224, 304), wobei eine Frequenz ($f_{LO1}$) des ersten Lokaloszillatorsignals unsymmetrisch zwischen dem ersten Nutzfrequenzband und dem zweiten Nutzfrequenzband liegt, um ein Inphas-Signal (120; 226) und ein Quadratur-Signal (122; 228) zu erhalten, die einen ersten Signalanteil (172, 282, 362) aufweisen, der ein gemischtes Abbild des ersten Nutzfrequenzbands darstellt, und die einen zweiten Signalanteil (174; 184; 364) aufweisen, der ein gemischtes Abbild des zweiten Nutzfrequenzbands darstellt; und
Mischen (420) des Inphase-Signals und des Quadratur-Signals unter Verwendung eines zweiten Lokaloszillatorsignals (132; 232, 234, 308), wobei eine Frequenz des zweiten Lokaloszillatorsignals so gewählt ist, dass das gemischte Abbild (172, 182; 362) des ersten Nutzfrequenzbands und das gemischte Abbild (174, 184; 364) des zweiten Nutzfrequenzbands bezüglich des zweiten Lokaloszillatorsignals zumindest teilweise Spiegelbänder zueinander sind,

wobei das Mischen erfolgt, um Informationsinhalte des ersten Nutzfrequenzbands und des zweiten Nutzfrequenzbands getrennt bereitzustellen.

**Claims**

1. A signal processor (100; 200) for processing a receiving signal (112; 218) with a first usable frequency band (162; 330) and a second usable frequency band (164; 332) for obtaining two output signals (140, 142; 236, 238), comprising:

a first mixer (110; 220) for mixing the receiving signal with a first local oscillator signal (114; 304), wherein a frequency of the first local oscillator signal is asymmetrical between the first usable frequency band and the second usable frequency band, and wherein the first mixer is implemented to obtain an in-phase signal (120; 226) and a quadrature signal (122; 228) having a first signal portion (172, 182; 362) representing a mixed image of the first usable frequency band, and having a second signal portion (174, 184; 364) representing a mixed image of the second usable frequency band; and
a second mixer (130) for mixing the in-phase signal and the quadrature signal using a second local oscillator signal (132; 232, 234, 308), wherein a frequency fLO2 of the second local oscillator signal is selected such that the mixed image (172, 182; 362) of the first usable frequency band generated by the first mixer and the mixed image (174, 184; 364) of the second usable frequency band generated by the first mixer are at least partly image bands of each other with regard to the second local oscillator signal,

wherein the second mixer is implemented to separately provide information content of the first usable frequency band and the second usable frequency band at its output (140, 142; 236, 238) in order to obtain a first output signal (140; 236), which substantially comprises information content of the first usable frequency band, and to obtain a second output signal (142; 238), which substantially comprises information content of the second usable frequency band.

2. The signal processor (100; 200) according to claim 1, wherein the signal processor further comprises a band pass filter (214), which is implemented to provide the receiving signal (112; 218) based on at least one input signal (210), and which is further implemented to let the first usable frequency band (162; 330) and the second usable frequency band (164; 332) pass, and to attenuate frequency bands adjacent to the first usable frequency band and the second usable frequency band more than the usable frequency bands.

3. The signal processor (100; 200) according to claim 2, wherein the band pass filter (214) is implemented to let the first usable frequency band (162; 330) pass in an unattenuated manner or with low attenuation, and to attenuate an image frequency band belonging to the first usable frequency band more than the first usable frequency band with regard to a frequency (fLO1) of the first local oscillator signal (114; 222, 224, 304; 334), and
wherein the band pass filter is implemented to let the second usable frequency band (164; 332) pass in an unattenuated manner or with low attenuation, and to attenuate an image frequency band (338) belonging to the second usable frequency band more than the second usable frequency band with regard to the frequency of the first local oscillator signal.

4. The signal processor (100; 200) according to one of claims 1 to 3, wherein the frequency (fLO1) of the first local oscillator signal (114; 222, 224, 304; 334) is selected such that the first usable frequency band (162; 330) and the second usable frequency band (164; 332) are imaged to non-overlapping or separate frequency bands (172, 174, 182, 184; 362, 364) by the first mixer (110; 220).

5. The signal processor (100; 200) according to one of claims 1 to 4, wherein, between a frequency f1 describing a band center of the first usable frequency band (162; 330) and a frequency f2 describing a band center of the second usable frequency band (164; 332) and the frequency fLO1 of the first local oscillator signal (114; 222, 224, 304; 334), one of the following relations holds:

$$f2 + 0,15 (f1 - f2) \leq fLO1 \leq f2 + 0,35 (f1 - f2)$$

or

$$f2 + 0,65 (f1 - f2) \leq fLO1 \leq f2 + 0,85 (f1 - f2),$$

wherein the frequency f2 is smaller than the frequency f1.

6. The signal processor (100; 200) according to claim 5, wherein the frequency fLO1 is outside the first usable frequency band (162; 330) and outside the second usable frequency band (164; 332).

7. The signal processor (100; 200) according to one of claims 1 to 6, wherein a frequency f3 describes a lower band limit of the second usable frequency band (164; 332), wherein a frequency f4 describes an upper band limit of the second usable frequency band, wherein a frequency f5 describes a lower band limit of the first usable frequency band (162; 330), wherein, for a frequency fLO1 of the first local oscillator signal (114; 222, 224, 304; 334), the following two conditions are fulfilled:

$$f4 \leq fLO1 \leq f5,$$

and

$$fLO1 \leq (f3 + f5)/2;$$

and
wherein further the following holds:

$$f3 \leq f4 \leq f5.$$

8. The signal processor (100; 200) according to one of claims 1 to 6, wherein a frequency f4 describes an upper band limit of the second usable frequency band (164; 332), wherein a frequency f5 describes a lower band limit of the first usable frequency band (162; 330), wherein a frequency f6 describes an upper band limit of the first usable frequency band (162; 330), wherein, for a frequency fLO1 of the first local oscillator signal (114; 222, 224, 304; 334), the following two conditions are fulfilled:

$$f4 \leq fLO1 \leq f5,$$

and

$$fLO1 \geq (f4 + f6)/2;$$

and
wherein further the following holds:

$$f4 \leq f5 \leq f6.$$

9. The signal processor (100; 200) according to one of claims 1 to 8, wherein the first usable frequency band (162; 330) is an L1 band of a GPS positioning system, and
wherein the second usable frequency band (164; 332) is an L2 band of the GPS positioning system; or
wherein the first usable frequency band is a first band of a GALILEO positioning system, and
wherein the second usable frequency band is a second band of the GALILEO positioning system.

10. The signal processor (100; 200) according to one of claims 1 to 9, wherein the frequency (fLO2) of the second local oscillator signal (132; 232, 234, 308) is selected such that the frequency of the second local oscillator signal lies between an image (172, 182, 362) of the first usable frequency band (162; 330), to which the first mixer (110; 220) images the first usable frequency band by mixing down, and an image (174, 184; 364) of the second usable frequency band (164; 332), to which the mixer images the second usable frequency band by mixing down.

11. The signal processor (100; 200) according to one of claims 1 to 10, wherein the frequency (fLO2) of the second local oscillator signal (132; 232, 234, 308) is selected such that the frequency of the second local oscillator signal differs from an average value between a center frequency of the first signal portion (172, 182; 362) and a center frequency of the second signal portion (174, 184; 364) by 20% at the most.

12. The signal processor (100; 200) according to one of claims 1 to 11, wherein the first mixer (110; 220) comprises an in-phase mixer (282) and a quadrature mixer (284),
wherein the in-phase mixer is implemented to receive the receiving signal (112; 218) and to image the same to the in-phase signal (120; 226) by performing frequency conversion,
wherein the quadrature mixer (284) is implemented to receive the receiving signal (112; 218) and to image the same to the quadrature signal (122; 228) by performing frequency conversion, and
wherein the in-phase mixer and the quadrature mixer are implemented to receive local oscillator signals (222, 224) of the same frequency phase-shifted to each other, which are both based on the first local oscillator signal (114; 304), wherein a phase shift between the local oscillator signals received from the in-phase mixer and the quadrature mixer lies in a range between 70 degrees and 110 degrees.

13. The signal processor (100; 200) according to one of claims 1 to 12, wherein the second mixer (130; 230) comprises a first mixer assembly (290), a second mixer assembly (292), a third mixer assembly (294), a fourth mixer assembly (296), a first combiner (298) and a second combiner (300),

wherein the first mixer assembly (290) is implemented to receive the in-phase signal (120; 226) and a local oscillator signal (232) associated to the first mixer assembly, and to generate an output signal associated to the first mixer assembly (290);

wherein the second mixer assembly (292) is implemented to receive the in-phase signal (120; 226) and a local oscillator signal (234) associated to the second mixer assembly (292), and to generate an output signal associated to the second mixer assembly (292);

wherein the third mixer assembly (294) is implemented to receive the quadrature signal (122; 228) and a local oscillator signal (232) associated to the third mixer assembly (294), and to generate an output signal associated to the third mixer assembly;

wherein the fourth mixer assembly (296) is implemented to receive the quadrature signal (122; 228) and a local oscillator signal (234) associated to the fourth mixer assembly (296), and to generate an output signal associated to the fourth mixer assembly;

wherein the first combiner (298) is implemented to combine the output signal of the second mixer assembly (292) with the output signal of the third mixer assembly (294) for obtaining the first output signal (140; 236);

wherein the second combiner (300) is implemented to combine the output signal of the first mixer assembly (290) with the output signal of the fourth mixer assembly (296) for obtaining the second output signal (142; 238);

wherein the local oscillator signals of the first mixer assembly and the third mixer assembly differ by 20 degrees at the most with regard to their phase position;

wherein the local oscillator signals of the second mixer assembly and the fourth mixer assembly differ by 20 degrees at the most with regard to their phase position; and

wherein the local oscillator signals of the first mixer assembly and the third mixer assembly have a phase shift in a range between 70 degrees and 110 degrees compared to the local oscillator signals of the second mixer assembly and the fourth mixer assembly.

14. The signal processor (100; 200) according to claim 13, wherein the local oscillator signal (232) of the first mixer assembly (290) is equal to the local oscillator signal of the third mixer assembly (294); and wherein the local oscillator signal of the second mixer assembly (292) is equal to the local oscillator signal of the fourth mixer assembly (296).

15. The signal processor (100; 200) according to claims 13 or 14, wherein the first combiner (298) is a first summer, which is implemented to sum the output signals of the second mixer assembly (292) and the third mixer assembly (294) with the same sign for obtaining the first output signal (140; 236); and wherein the second combiner (300) is a second summer, which is implemented to sum the output signals of the first mixer assembly (290) and the fourth mixer assembly (296) with the same sign for obtaining the second output signal (142; 238).

16. The signal processor (100; 200) according to one of claims 1 to 15, wherein the signal processor is implemented to generate the second local oscillator signal (132; 232, 234, 308) from the first local oscillator signal (304) by a frequency divider (312), or to derive the first local oscillator signal (114; 222, 224, 304) and the second local oscillator signal (132; 232, 234, 308) from a common signal by a frequency synthesizer, such that the first local oscillator signal and the second local oscillator signal are at a predetermined fixed frequency ratio to each other.

17. The signal processor (100; 200) according to one of claims 1 to 16, wherein the first mixer (110; 220) and the second mixer (130; 230) are implemented to process analog value-continuous and time-continuous input signals (112, 120, 122; 218, 226, 228) and local oscillator signals (114, 132; 222, 224, 304, 232, 234, 310) and to output output signals (120, 122, 140, 142; 226, 228, 236, 238) in a value-continuous and time-continuous representation.

18. The signal processor (100; 200) according to one of claims I to 17, wherein the signal processor is implemented to sample the first output signal (140; 236) or a signal derived therefrom with a sampling frequency (fs) and to convert the same in an analog/digital manner for obtaining a first digitalized signal (250), and to sample the second output signal (142; 238) or a signal derived there from with the sampling frequency and to convert the same in an analog/digital manner for obtaining a second digitalized signal (280), wherein the sampling frequency deviates by 20% at the most from a four-fold of a second intermediate frequency to which the second mixer (130; 230) images the image (172, 182; 362) of the first usable frequency band (162; 330) and the image (174, 184; 364) of the second usable frequency band (164; 332).

19. The signal processor (100; 200) according to claim 18, wherein the second intermediate frequency is defined as a center frequency of a signal portion in the first output signal (140; 236) generated by down-mixing the image (172, 182; 362) of the first usable frequency band (162; 330) by the second mixer, or as a center frequency of a signal portion in the second output signal (142; 238) generated by down-mixing the image (174, 184; 364) of the second usable frequency band (164; 332) by the second mixer.

20. The signal processor (100; 200) according to claims 18 or 19, wherein the signal processor is implemented to mix the first digitalized signal (250) down to a base band and to mix the second digitalized signal (280) down to a base band.

21. The signal processor (100; 200) according to one of claims 18 to 20, wherein the signal processor is implemented to submit the first digitalized output signal (250) to quadrature sampling by setting every second sample of the first digitalized output signal to zero or removing the same, and by weighting the other samples alternately with a first predetermined value (+1) and a second predetermined value (-1), for obtaining a first in-phase output signal (282), wherein the first predetermined value (+1) and the second predetermined value (-1) are inverse to each other, and by setting every second sample of the first digitalized output signal (280) to zero or removing the same, offset in time by one sampling step to the calculation of the first in-phase output signal (284), and by weighting the other samples alternately with a third predetermined value (+1) and a fourth predetermined value (-1), for obtaining a first quadrature output signal, wherein the third predetermined value (+1) and the fourth predetermined value (-1) are inverse to each other.

22. The signal processor (100; 200) according to one of claims 1 to 21, wherein the first mixer (110; 220) and the second mixer (130; 230) are realized in CMOS technology.

23. The signal processor (100; 200) according to one of claims 1 to 22 wherein the first mixer (110; 220) and the second mixer (130; 230) are monolithically integrated on a chip.

24. A method (400) for processing a receiving signal (112; 218) with a first usable frequency band (162; 330) and a second usable frequency band (164; 232), comprising:

mixing the receiving signal with a first local oscillator signal (114; 222, 224, 304), wherein a frequency (fLO1) of the first local oscillator signal is asymmetrical between the first usable frequency band and the second usable frequency band, for obtaining an in-phase signal (120; 226) and a quadrature signal (122; 228) having a first signal portion (172, 282, 362) representing a mixed image of the first usable frequency band, and having a second signal portion (174; 184; 364) representing a mixed image of the second usable frequency band; and mixing (420) the in-phase signal and the quadrature signal by using a second local oscillator signal (132; 232, 234, 308), wherein a frequency of the second local oscillator signal is selected such that the mixed image (172, 182; 362) of the first usable frequency band and the mixed image (174, 184; 364) of the second usable frequency band are at least partly image bands of each other with regard to the second local oscillator signal,

wherein mixing is performed for separately providing information content of the first usable frequency band and the second usable frequency band.

**Revendications**

1. Conditionneur de signaux (100; 200) pour le traitement d'un signal de réception (112; 218) avec une première bande de fréquences utiles (162; 330) et une deuxième bande de fréquences utiles (164; 332), pour obtenir deux signaux de sortie (140, 142; 236, 238), aux caractéristiques suivantes :

un premier mélangeur (110; 220) destiné à mélanger le signal de réception avec un premier signal d'oscillateur local (114; 304), une fréquence du premier signal d'oscillateur local se trouvant de manière asymétrique entre la première bande de fréquences utiles et la deuxième bande de fréquences utiles, et le premier mélangeur étant réalisé de manière à obtenir un signal en phase (120; 226) et un signal en quadrature (122; 228) qui présentent une première part de signal (172, 182; 362) représentant une reproduction mélangée de la première bande de fréquences utiles, et qui présentent une deuxième part de signal (174, 184; 364) représentant une reproduction mélangée de la deuxième bande de fréquences utiles; et un deuxième mélangeur (130) destiné à mélanger le signal en phase et le signal en quadrature à l'aide d'un deuxième signal d'oscillateur local (132; 232, 234, 308), une fréquence fLO2 du deuxième signal d'oscillateur local étant choisie de sorte que la représentation mélangée (172, 182; 362), générée par le premier mélangeur, de la première bande de fréquences utiles et la représentation mélangée (174, 184; 364), générée par le premier mélangeur, de la deuxième bande de fréquences utiles soient, par rapport au deuxième signal d'oscillateur local, au moins partiellement des bandes miroirs l'une par rapport à l'autre,

dans lequel le deuxième mélangeur est réalisé de manière à mettre à disposition séparément à sa sortie (140, 142; 236, 238) des contenus d'information de la première bande de fréquences utiles et de la deuxième bande de fréquences utiles, pour obtenir un premier signal de sortie (140; 236) qui comprend substantiellement un contenu d'informations de la première bande de fréquences utiles, et pour obtenir un deuxième signal de sortie (142; 238) qui comprend substantiellement un contenu d'informations de la deuxième bande de fréquences utiles.

2.  Conditionneur de signaux (100; 200) selon la revendication 1, dans lequel le conditionneur de signaux comporte, par ailleurs, un filtre passe-bande (214) qui est réalisé de manière à mettre à disposition le signal de réception (112; 218) sur base d'au moins un signal d'entrée (210), et qui est par ailleurs réalisé de manière à laisser passer la première bande de fréquences utiles (162; 330) et la deuxième bande de fréquences utiles (164; 332), et à atténuer les bandes de fréquences adjacentes à la première bande de fréquences utiles et à la deuxième bande de fréquences utiles plus fortement que les bandes de fréquences utiles.

3.  Conditionneur de signaux (100; 200) selon la revendication 2, dans lequel le filtre passe-bande (214) est réalisé de manière à laisser passer la première bande de fréquences utiles (162; 330) non atténuée ou avec une faible atténuation, et à atténuer une bande de fréquence miroir (336) appartenant à la première bande de fréquences utiles en ce qui concerne une fréquence ($f_{L01}$) du premier signal d'oscillateur local (114; 222, 224, 304; 334) plus fortement que la première bande de fréquences utiles, et dans lequel le filtre passe-bande est réalisé de manière à laisser passer la deuxième bande de fréquences utiles (164; 332) non atténuée ou avec une faible atténuation, et à atténuer une bande de fréquence miroir (338) appartenant à la deuxième bande de fréquences utiles en ce qui concerne une fréquence du premier signal d'oscillateur local plus fortement que la deuxième bande de fréquences utiles.

4.  Conditionneur de signaux (100; 200) selon l'une des revendications 1 à 3, dans lequel la fréquence ($f_{L01}$) du premier signal d'oscillateur local (114; 222, 224, 304; 334) est choisie de sorte que la première bande de fréquences utiles (162; 330) et la deuxième bande de fréquences utiles (164; 332) soient reproduites par le premier mélangeur (110; 220) sur des bandes de fréquences (172, 174, 182, 184; 362, 364) ne se recouvrant pas ou distantes l'une de l'autre.

5.  Conditionneur de signaux (100; 200) selon l'une des revendications 1 à 4, entre une fréquence $f_1$ décrivant un centre de la première bande de fréquences utiles (162; 330) et une fréquence $f_2$ décrivant un centre de la deuxième bande de fréquences utiles (164; 332) et la fréquence $f_{L01}$ du premier signal d'oscillateur local (114; 222, 224, 304; 334) valant l'un des rapports suivantes:

$$f_2 + 0,15 \ (f_1 - f_2) \leq f_{L01} \leq f_2 + 0,35 \ (f_1 - f_2)$$

ou

$$f_2 + 0,65 \ (f_1 - f_2) \leq f_{L01} \leq f_2 + 0,85 \ (f_1 - f_2),$$

la fréquence $f_2$ étant inférieure à la fréquence $f_1$.

6.  Conditionneur de signaux (100; 200) selon la revendication 5, dans lequel la fréquence $f_{L01}$ se situe en dehors de la première bande de fréquences utiles (162; 330) et en dehors de la deuxième bande de fréquences utiles (164; 332).

7.  Conditionneur de signaux (100; 200) selon l'une des revendications 1 à 6, dans lequel une fréquence $f_3$ décrit une limite inférieure de la deuxième bande de fréquences utiles (164; 332), dans lequel la fréquence $f_4$ décrit une limite supérieure de la deuxième bande de fréquences utiles, dans lequel une fréquence $f_5$ décrit une limite inférieure de la première bande de fréquences utiles (162; 330), pour une fréquence $f_{L01}$ du premier signal d'oscillateur local (114; 222, 224, 304; 334) étant remplies les deux conditions suivantes:

$$f_4 \leq f_{L01} \leq f_5,$$

et

$$f_{L01} \leq (f_3 + f_5)/2;$$

et
où vaut par ailleurs:

$$f_3 \leq f_4 \leq f_5$$

**8.** Conditionneur de signaux (100; 200) selon l'une des revendications 1 à 6, dans lequel une fréquence $f_4$ décrit une limite supérieure de la deuxième bande de fréquences utiles (164; 332), dans lequel une fréquence $f_5$ décrit une limite inférieure de la première bande de fréquences utiles (162; 330), dans lequel une fréquence $f_6$ décrit une limite supérieure de la première bande de fréquences utiles (162; 330), pour une fréquence $f_{L01}$ du premier signal d'oscillateur local (114; 222, 224, 304; 334) étant remplies les deux conditions suivantes:

$$f_4 \leq f_{L01} \leq f_5,$$

et

$$f_{L01} \leq (f_4 + f_6)/2;$$

et
où vaut par ailleurs:

$$f_4 \leq f_5 \leq f_6$$

**9.** Conditionneur de signaux (100; 200) selon l'une des revendications 1 à 8, dans lequel la première bande de fréquences utiles (162; 330) est une bande L1 d'un système de détermination de position GPS, et dans lequel la deuxième bande de fréquences utiles (164; 332) est une bande L2 du système de détermination de position GPS; ou dans lequel la première bande de fréquences utiles est une première bande d'un système de détermination de position GALILEO, et
dans lequel la deuxième bande de fréquences utiles est une deuxième bande du système de détermination de position GALILEO.

**10.** Conditionneur de signaux (100; 200) selon l'une des revendications 1 à 9, dans lequel la fréquence ($f_{L02}$) du deuxième signal d'oscillateur local (132; 232, 234, 308) est choisie de sorte que la fréquence du deuxième signal d'oscillateur local se situe entre une reproduction (172, 182; 362) de la première bande de fréquences utiles (162; 330) sur laquelle le premier mélangeur (110; 220) reproduit la première bande de fréquences utiles par un mélange vers le bas et une reproduction (174, 184; 364) de la deuxième bande de fréquences utiles (164; 332) sur laquelle le premier mélangeur reproduit la deuxième bande de fréquences utiles par un mélange vers le bas.

**11.** Conditionneur de signaux (100; 200) selon l'une des revendications 1 à 10, dans lequel la fréquence ($f_{L02}$) du deuxième signal d'oscillateur local (132; 232, 234, 304) est choisie de sorte que la fréquence du deuxième signal d'oscillateur local diffère de tout au plus 20 % d'une valeur moyenne entre une fréquence moyenne de la première part de signal (172, 182; 362) et une fréquence moyenne de la deuxième part de signal (174, 184; 364).

**12.** Conditionneur de signaux (100; 200) selon l'une des revendications 1 à 11, dans lequel le premier mélangeur (110; 220) comporte un mélangeur en phase (282) et un mélangeur en quadrature (284),

le mélangeur en phase étant réalisé de manière à recevoir le signal de réception (112; 218) et à le reproduire sur le signal en phase (120; 226) en réalisation une conversion de fréquence,

le mélangeur en quadrature (284) étant réalisé de manière à recevoir le signal de réception (112; 218) et à le reproduire sur le signal en quadrature (122; 228) en réalisant un abaissement de la fréquence, et

le mélangeur en phase et le mélangeur en quadrature étant réalisés de manière à recevoir des signaux d'oscillateur local (222, 224) de même fréquence déphasés entre eux qui sont tous deux basés sur le premier signal d'oscillateur local (114; 304),

un déphasage entre les signaux d'oscillateur local reçus du mélangeur en phase et du mélangeur en quadrature se situant dans une plage comprise entre 70 degrés et 110 degrés.

**13.** Conditionneur de signaux (100; 200) selon l'une des revendications 1 à 12, dans lequel le deuxième mélangeur (130; 230) comporte un premier aménagement mélangeur (290), un deuxième aménagement mélangeur (292), un troisième aménagement mélangeur (294), un quatrième aménagement mélangeur (296), un premier combineur (298) et un deuxième combineur (300),

le premier aménagement mélangeur (290) étant réalisé de manière à recevoir le signal en phase (120; 226) et un signal d'oscillateur local (232) associé au premier aménagement mélangeur, et à générer un signal de sortie associé au premier aménagement mélangeur (290);

le deuxième aménagement mélangeur (292) étant réalisé de manière à recevoir le signal en phase (120; 226) et un signal d'oscillateur local (234) associé au deuxième aménagement mélangeur (292), et à générer un signal de sortie associé au deuxième aménagement mélangeur (292);

le troisième aménagement mélangeur (294) étant réalisé de manière à recevoir le signal en quadrature (122; 228) et un signal d'oscillateur local (232) associé au troisième aménagement mélangeur (294), et à générer un signal de sortie associé au troisième aménagement mélangeur;

le quatrième aménagement mélangeur (296) étant réalisé de manière à recevoir le signal en quadrature (122; 228) et un signal d'oscillateur local (234) associé au quatrième aménagement mélangeur (296), et à générer un signal de sortie associé au quatrième aménagement mélangeur;

le premier combineur (298) étant réalisé de manière à combiner le signal de sortie du deuxième aménagement mélangeur (292) avec le signal de sortie du troisième aménagement mélangeur (294), pour obtenir le premier signal de sortie (140; 236);

le deuxième combineur (300) étant réalisé de manière à combiner le signal de sortie du premier aménagement mélangeur (290) avec le signal de sortie du quatrième aménagement mélangeur (296), pour obtenir le deuxième signal de sortie (142; 238);

les signaux d'oscillateur local du premier aménagement mélangeur et du troisième aménagement mélangeur différant, en ce qui concerne leur position de phase de tout au plus 20 degrés;

les signaux d'oscillateur local du deuxième aménagement mélangeur et du quatrième aménagement mélangeur différant, en ce qui concerne leur position de phase de tout au plus 20 degrés;

les signaux d'oscillateur local du premier aménagement mélangeur et du troisième aménagement mélangeur présentant, par rapport aux signaux d'oscillateur local deuxième aménagement mélangeur et du quatrième aménagement mélangeur, un déphasage dans une plage comprise entre 70 degrés et 110 degrés.

**14.** Conditionneur de signaux (100; 200) selon la revendication 13, dans lequel le signal d'oscillateur local (232) du premier aménagement mélangeur (290) est égal au signal d'oscillateur local du troisième aménagement mélangeur (294); et

dans lequel le signal d'oscillateur local du deuxième aménagement mélangeur (292) est égal au signal d'oscillateur local du quatrième aménagement mélangeur (296).

**15.** Conditionneur de signaux (100; 200) selon 1 revendication 13 ou 14, dans lequel le premier combineur (298) est un premier additionneur qui est réalisé de manière à additionner les signaux de sortie du deuxième aménagement mélangeur (292) et du troisième aménagement mélangeur (294) de même signe, pour obtenir le premier signal de sortie (140; 236); et

dans lequel le deuxième combineur (300) est un deuxième additionneur qui est réalisé de manière à additionner les signaux de sortie du premier aménagement mélangeur (290) et du quatrième aménagement mélangeur (296) de même signe, pour obtenir le deuxième signal de sortie (142; 238).

**16.** Conditionneur de signaux (100; 200) selon l'une des revendications 1 à 15, dans lequel le conditionneur de signaux est réalisé de manière à générer le deuxième signal d'oscillateur local (132; 232, 234, 308) par un diviseur de fréquence (312) à partir du premier signal d'oscillateur local (304), ou à dériver le premier signal d'oscillateur local (114; 222, 224, 304) et le deuxième signal d'oscillateur local (132; 232, 234, 308) par un synthétiseur de fréquence à partir d'un signal commun, de sorte que le premier signal d'oscillateur local et le deuxième signal d'oscillateur local présentent un rapport de fréquence fixe prédéterminé entre eux.

**17.** Conditionneur de signaux (100; 200) selon l'une des revendications 1 à 16, dans lequel le premier mélangeur (110; 220) et le deuxième mélangeur (130; 230) sont réalisés de manière à traiter les signaux d'entrée analogiques continus en valeur et continus dans le temps (112, 120, 122; 218, 226, 228) et les signaux d'oscillateur local (114, 132; 222, 224, 304, 232, 234, 310), et à sortir les signaux de sortie (120, 122, 140, 142; 226, 228, 236, 238) en une représentation continue en valeur et continue dans le temps.

**18.** Conditionneur de signaux (100; 200) selon l'une des revendications 1 à 17, dans lequel le conditionneur de signaux est réalisé de manière à balayer le premier signal de sortie (140; 236) ou un signal dérivé de ce dernier avec une fréquence de balayage ($f_s$) et à le convertir d'analogique à numérique, pour obtenir un premier signal numérisé (250), et
à balayer le deuxième signal de sortie (142; 238) ou un signal dérivé de ce dernier avec la fréquence de balayage et à le convertir d'analogique à numérique, pour obtenir un deuxième signal numérisé (280),
la fréquence de balayage différant de tout au plus 20 % d'un multiple d'une deuxième fréquence intermédiaire sur laquelle le deuxième mélangeur (130; 230) reproduit la reproduction (172, 182; 362) de la première bande de fréquences utiles (162; 330) et la reproduction (174, 184; 364) de la deuxième bande de fréquences utiles (164; 332).

**19.** Conditionneur de signaux (100; 200) selon la revendication 18, dans lequel la deuxième fréquence intermédiaire est définie comme fréquence centrale d'une part de signal, générée par un mélange vers le bas de la reproduction (172, 182; 362) de la première bande de fréquences utiles (162; 330) par le deuxième mélangeur, dans le premier signal de sortie (140; 236), ou comme fréquence centrale d'une part de signal, générée par un mélange vers le bas de la reproduction (174, 184; 364) de la deuxième bande de fréquences utiles (164; 132) par le deuxième mélangeur, dans le deuxième signal de sortie (142; 238).

**20.** Conditionneur de signaux (100; 200) selon la revendication 18 ou 19, dans lequel le conditionneur de signaux est réalisé de manière à mélanger vers le bas le premier signal numérisé (250) à une bande de base, et à mélanger vers le bas le deuxième signal numérisé (280) à une bande de base.

**21.** Conditionneur de signaux (100; 200) selon l'une des revendications 18 à 20, dans lequel le conditionneur de signaux est réalisé de manière à soumettre le premier signal de sortie numérisé (250) à un balayage en quadrature en mettant à zéro ou en éliminant chaque deuxième valeur de balayage du premier signal de sortie numérisé, et en pondérant les valeurs de balayage restantes alternativement par une première valeur prédéterminée (+1) et une deuxième valeur prédéterminée (-1), pour obtenir un premier signal de sortie en phase (282), la première valeur prédéterminée (+1) et la deuxième valeur prédéterminée (-1) étant inverses l'une à l'autre, et en mettant à zéro ou en éliminant, de manière décalée dans le temps d'une étape de balayage par rapport au calcul du premier signal de sortie en phase (284), chaque deuxième valeur de balayage du premier signal de sortie numérisé (280), et en en pondérant les valeurs de balayage restantes alternativement par une troisième valeur prédéterminée (+1) et une quatrième valeur prédéterminée (-1), pour obtenir un premier signal de sortie en quadrature, la troisième valeur prédéterminée (+1) et la quatrième valeur prédéterminée (-1) étant inverses l'une à l'autre.

**22.** Conditionneur de signaux (100; 200) selon l'une des revendications 1 à 21, dans lequel le premier mélangeur (110; 220) et le deuxième mélangeur (130; 230) sont réalisés en une technologie CMOS.

**23.** Conditionneur de signaux (100; 200) selon l'une des revendications 1 à 22, dans lequel le premier mélangeur (110; 220) et le deuxième mélangeur (130; 230) sont intégrés de manière monolithique sur une puce.

**24.** Procédé (400) pour traiter un signal de réception (112; 218) avec une première bande de fréquences utiles (162; 330) et une deuxième bande de fréquences utiles (164; 232), aux étapes suivantes consistant à:

mélanger le signal de réception avec un premier signal d'oscillateur local (114; 222, 224, 304), une fréquence ($f_{L01}$) du premier signal d'oscillateur local se trouvant de manière asymétrique entre la première bande de fréquences utiles et la deuxième bande de fréquences utiles, pour obtenir un signal en phase (120; 226) et un signal en quadrature (122; 228) qui présentent une première part de signal (172, 282; 362) représentant une reproduction mélangée de la première bande de fréquences utiles, et qui présentent une deuxième part de signal (174, 184; 364) représentant une reproduction mélangée de la deuxième bande de fréquences utiles; et mélanger (420) le signal en phase et le signal en quadrature à l'aide d'un deuxième signal d'oscillateur local (132; 232, 234, 308), une fréquence du deuxième signal d'oscillateur local étant choisie de sorte que la représentation mélangée (172, 182; 362) de la première bande de fréquences utiles et la représentation mélangée (174, 184; 364) de la deuxième bande de fréquences utiles soient, par rapport au deuxième signal d'oscillateur local, au moins partiellement des bandes miroirs l'une par rapport à l'autre,

le mélange ayant lieu pour mettre à disposition séparément les contenus d'informations de la première bande de fréquences utiles et de la deuxième bande de fréquences utiles.

FIG 1

$f_3$ $f_2$ $f_4$ $f_{LO1}$ $f_5$ $f_1$ $f_6$

$f_{LO1}-f_4$  $f_{LO2}$  $f_6-f_{LO1}$  $f_{LO1}+f_3$  $f_{LO1}+f_5$
$f_{LO1}-f_3$  $f_5-f_{LO1}$  $f_{LO1}+f_4$  $f_{LO1}+f_6$

$f_6-f_{LO1}-f_{LO2}$
$f_5-f_{LO1}-f_{LO2}$

$f_{LO2}-f_{LO2}+f_4$
$f_{LO2}-f_{LO1}+f_3$

EP 2 033 326 B1

FIG 2

# FIG 3

# FIG 4

400

410

Mischen eines Empfangssignals
mit einem ersten Lokaloszillatorsignal,
wobei eine Frequenz des ersten Lokaloszillatorsignals
unsymmetrisch zwischen dem ersten
Nutzfrequenzband liegt,
um ein Inphase-Signal und ein Quadratur-Signal
zu erhalten, die einen ersten Signalanteil aufweisen,
der ein gemischtes Abbild des 1. Nutzfrequenzbandes
darstellt, und die einen zweiten Signalanteil
aufweisen, der ein gemischtes Abbild des zweiten
Nutzfrequenzbandes darstellt.

Mischen des Inphase-Signals und des Quadratur-
signals unter Verwenung eines zweiten Lokaloszillatorsignals, wobei eine Frequenz des zweiten Lokaloszillatorsignals
so gewählt ist, daß das gemischte Abbild des
ersten Nutzfrequenzbandes und das gemischte Abbild
des zweiten Lokaloszillatorsignals zumindest teilweise
Spiegelbänder zueinander sind,
wobei das Mischen erfolgt, um Informationsinhalte
des ersten Nutzfrequnzbandes und des zweiten
Nutzfrequenzbandes getrennt bereitzustellen.

420

**EP 2 033 326 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9714052 A
- US 20060046773 A1
- US 5610984 A